(19) Europäisches Patentamt
European Patent Office
Office européen des brevets

(11) EP 3 096 136 A1

(12) **EUROPEAN PATENT APPLICATION**
published in accordance with Art. 153(4) EPC

(43) Date of publication:
**23.11.2016 Bulletin 2016/47**

(21) Application number: **15737741.7**

(22) Date of filing: **13.01.2015**

(51) Int Cl.:
***G01N 30/00*** *(2006.01)* ***B01J 20/28*** *(2006.01)*
***G01N 30/88*** *(2006.01)*

(86) International application number:
**PCT/JP2015/050602**

(87) International publication number:
**WO 2015/108020 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.01.2014 JP 2014005861**

(71) Applicant: **Sumitomo Bakelite Co.,Ltd.**
**Tokyo 140-0002 (JP)**

(72) Inventor: **MATSUMOTO Takayuki**
**Tokyo 140-0002 (JP)**

(74) Representative: **Müller-Boré & Partner Patentanwälte PartG mbB**
**Friedenheimer Brücke 21**
**80639 München (DE)**

(54) **COMPOSITION, METHOD FOR PREPARING SUGAR CHAIN SAMPLE, AND METHOD FOR ANALYZING SUGAR CHAIN**

(57) A composition is provided, including: polymer particles having a functional group for capturing a sugar chain, wherein the rate of change of mass calculated by Equation (F1) below is more than 90% and less than 112%.

[In Equation (F1), A represents the mass of the composition after incubation for 4 hours under an environment of a relative humidity of 50% and a temperature of 25°C, and B represents the mass of the composition before the incubation.

$$\text{Rate of change (\%)} = A/B \times 100 \text{ --- (F1)}$$

EP 3 096 136 A1

## Description

### Technical Field

The present invention relates to a composition, a method for preparing a sugar chain sample, and a method for analyzing a sugar chain.

### Background Art

Biopolymers, such as sugar chains, glycoproteins, glycopeptides, peptides, oligopeptides, proteins, nucleic acids, and lipids, play an important role in the field of biotechnologies, such as medicine, cell engineering, and organ engineering, and the clarification of control mechanisms of biological reactions by these substances contributes to the development of biotechnologies.

Sugar chain is the generic term for molecules which are bonded in the form of a chain by the glycoside bonds of monosaccharides, such as glucose, galactose, mannose, fucose, xylose, N-acetyl glucosamine, N-acetylgalactosamine, sialic acid, and derivatives thereof. It has been found that, among biopolymers, sugar chains are very rich in diversity, and are deeply involved in various functions of organisms present in nature, for example, intercellular signaling, adjustment of functions and interactions of proteins, and the like.

Sugar chains often exist as a glycoconjugate bonded to proteins or lipids in vivo. Examples of biopolymers having sugar chains include proteoglycans of cell walls of plant cells contributing to the stabilization of cells, glycolipids having an influence on the differentiation, proliferation, adhesion, or migration of cells, and glycoproteins involved in intercellular interaction or cell recognition. It has been gradually found that the sugar chains contained in these biopolymers have a mechanism for controlling a highly-precise biological reaction while carrying out, aiding, amplifying, adjusting, or inhibiting the function with these biopolymers. If relationships of differentiation and proliferation of sugar chains and cells, cell adhesion, immunity, and cancerization of cells are clearly defined, it can be expected to achieve new developments by combining this sugar chain engineering with medicine, cell engineering, or organ engineering.

In glycoprotein drugs, there are many cases where the sugar chains thereof play an important role in biological activity expression or the like. Therefore, as a parameter of quality control of glycoprotein drugs, the evaluation of sugar chains is very important. Particularly, for antibody drugs, it has been reported that this sugar chain structure affects antibody-dependent cellular cytotoxicity activity (ADCC activity), and the importance of sugar chain structure analysis has increased.

Thus, in recent years, a method for analyzing a sugar chain structure with rapidity, simplicity, and high accuracy has been required, and the analysis of a sugar chain has been carried out by a wide variety of methods, such as high-performance liquid chromatography (HPLC), nuclear magnetic resonance, capillary electrophoresis (CE method), mass spectrometry, and a lectin array method.

In order to analyze a sugar chain using these various methods, it is required to separate and purify proteins, peptides, lipids, nucleic acids contained in a biological sample from a sugar chain in advance. The purification and labeling of these sugar chains need time and man-hours, and it is difficult to prepare a large amount of various kinds of samples at one time.

As a technology for solving this problem, a method has been reported for preparing a sugar chain sample using polymer particles having a functional group for capturing sugar chains such as a hydrazide group and an aminooxy group (refer to PTL 1).

### Citation List

#### Patent Literature

[PTL 1] PCT International Publication No. WO 2008/018170

### Summary of Invention

#### Technical Problem

During the transportation of products, it is also considered that the products are often subjected to a temperature condition of higher than 50°C. Thus, the present inventors have examined the quality stability of polymer particles having a functional group for capturing sugar chains under a high-temperature condition. As a result, it was found that the aggregation of the polymer particles occurs under a high-temperature condition of 60°C. Since this aggregation has an influence on the performance and operability of the polymer particles, it is necessary to suppress the aggregation.

An object of the present invention is to provide polymer particles having a functional group for capturing sugar chains, the aggregation of the polymer particles being suppressed under a high-temperature condition.

Solution to Problem

[1] A composition, comprising: polymer particles having a functional group for capturing a sugar chain, wherein the rate of change of mass calculated by Equation (F1) below is more than 90% and less than 112%.

$$\text{Rate of change (\%)} = A/B \times 100 \text{ --- (F1)}$$

[In Equation (F1), A represents the mass of the composition after incubation for 4 hours under an environment of a relative humidity of 50% and a temperature of 25°C, and B represents the mass of the composition before the incubation.]
[2] The composition according to [1], wherein the rate of change of average particle diameter calculated by Equation (F2) below is 90% to 120%.

$$\text{Rate of change (\%)} = C/D \times 100 \text{ --- (F2)}$$

[In Equation (F2), C represents the average particle diameter of the polymer particles in the composition, measured by a laser diffraction/scattering type particle size analyzer after the heat-retaining treatment of the composition at 60°C for 3 days under a drying condition and suspending the composition in water, and D represents the average particle diameter of the polymer particles in the composition, measured by a laser diffraction/scattering type particle size analyzer before the heat-retaining treatment of the composition and suspending the composition in water.]
[3] The composition according to [1] or [2], wherein the composition containing the polymer particles further contains a surfactant.
[4] The composition according to [3], wherein the polymer particles are coated with the surfactant.
[5] The composition according to [3] or [4], wherein the surfactant is a sorbitan fatty acid ester or an anionic surfactant.
[6] The composition according to any one of [1] to [5], wherein the average particle diameter of the polymer particles is 0.05 μm to 1000 μm.
[7] The composition according to any one of [1] to [6], wherein the functional group is a hydrazide group or an aminooxy group.
[8] The composition according to any one of [1] to [7], wherein each of the polymer particles has a crosslinked polymer structure represented by Formula (1) below.

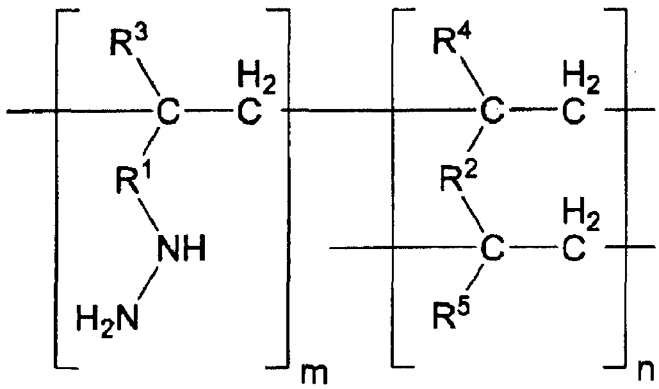

(1)

[In Formula (1), each of $R^1$ and $R^2$ represents a hydrocarbon chain of 1 to 20 carbon atoms which may be interrupted by -O-, -S-, -NH-, -CO-, or -CONH-; each of $R^3$, $R^4$, and $R^5$ represents H, $CH_3$, or a hydrocarbon chain of 2 to 5 carbon atoms; and m:n = 99:1 to 70:30 is satisfied.]
[9] The composition according to [8], wherein the crosslinked polymer structure is represented by Formula (2) below.

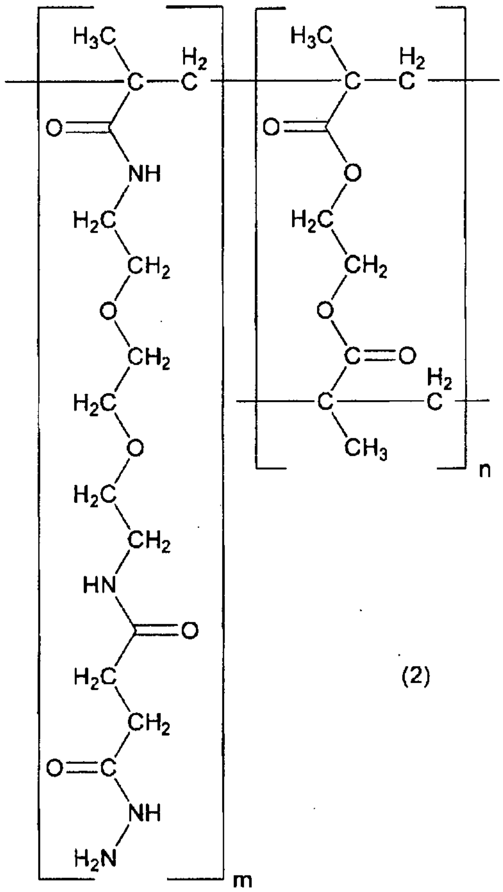

(2)

[In Formula (2), m:n = 99:1 to 70:30 is satisfied.]

[10] A method for preparing a sugar chain sample, comprising the processes of: (a) mixing a sample containing a sugar chain with the composition according to any one of [1] to [9] to bond the sugar chain to the polymer particle in the composition; (b) washing the polymer particle bonded to the sugar chain; and (c) liberating the sugar chain from the polymer particle bonded to the sugar chain.

[11] A method for analyzing a sugar chain in a sample, comprising the processes of: (a) mixing a sample containing a sugar chain with the composition according to any one of [1] to [9] to bond the sugar chain to the polymer particle in the composition; (b) washing the polymer particle bonded to the sugar chain; (c) liberating the sugar chain from the polymer particle bonded to the sugar chain; and (d) analyzing the liberated sugar chain.

(1) A polymer particle having a functional group for capturing a sugar chain and coated with a surfactant.

(2) The polymer particle according to (1), wherein the functional group for capturing a sugar chain is a hydrazide group or an aminooxy group.

(3) The polymer particle according to (2), wherein the polymer particle has a crosslinked polymer structure represented by (Formula 1) below.

(Formula 1)

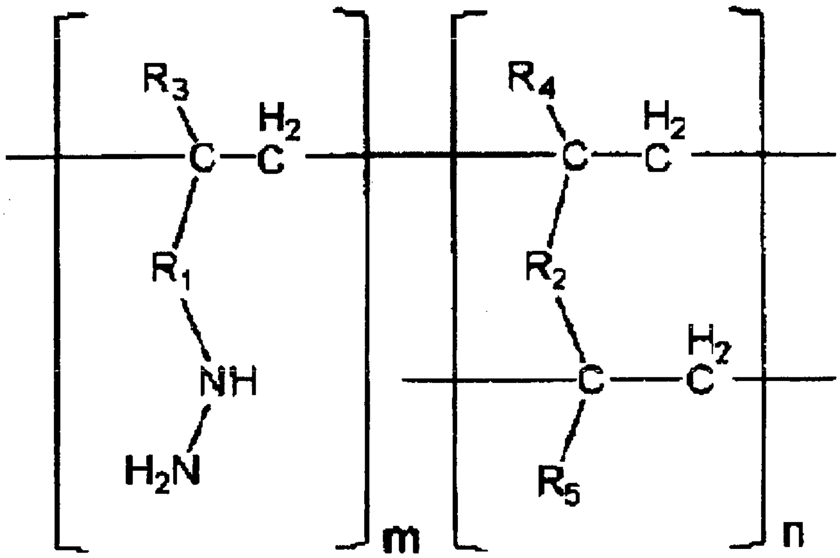

(Each of $R_1$ and $R_2$ represents a hydrocarbon chain of 1 to 20 carbon atoms which may be interrupted by -O-, -S-, -NH-, -CO-, or -CONH-; each of $R_3$, $R_4$, and $R_5$ represents H, $CH_3$, or a hydrocarbon chain of 2 to 5 carbon atoms; and each of m and n represents the number of monomer units.)

(4) The polymer particle according to (3), wherein the crosslinked polymer structure is represented by (Formula 2) below.

(Formula 2)

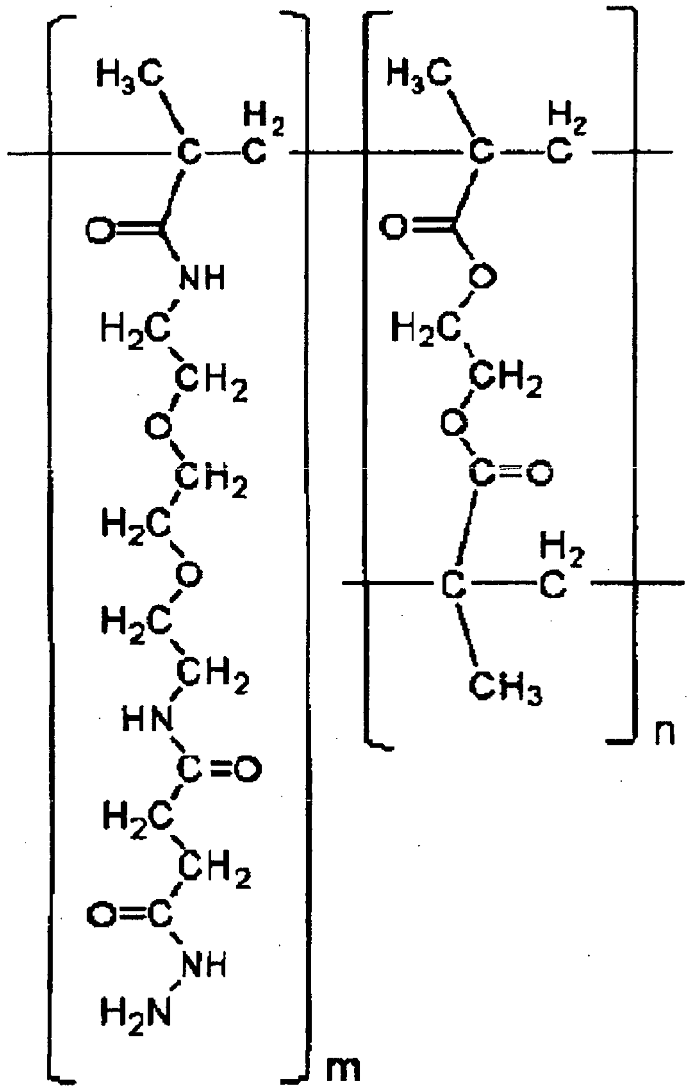

(Each of m and n represents the number of monomer units.)

(5) The polymer particle according to any one of (1) to (4), wherein the surfactant is sorbitan monostearate, sorbitan tristearate, or sodium lauryl sulfate.

(6) A method of suppressing the aggregation of polymer particles having a functional group for capturing a sugar chain under a high-temperature condition, comprising coating the polymer particles with a surfactant.

(7) A method of reducing the hygroscopicity of polymer particle having a functional group for capturing a sugar chain, comprising coating the polymer particle with a surfactant.

(8) The method according to (6) or (7), wherein the functional group for capturing a sugar chain is a hydrazide group.

(9) The method according to (8), wherein the polymer particle has a crosslinked polymer structure represented by (Formula 1) below.

(Formula 1)

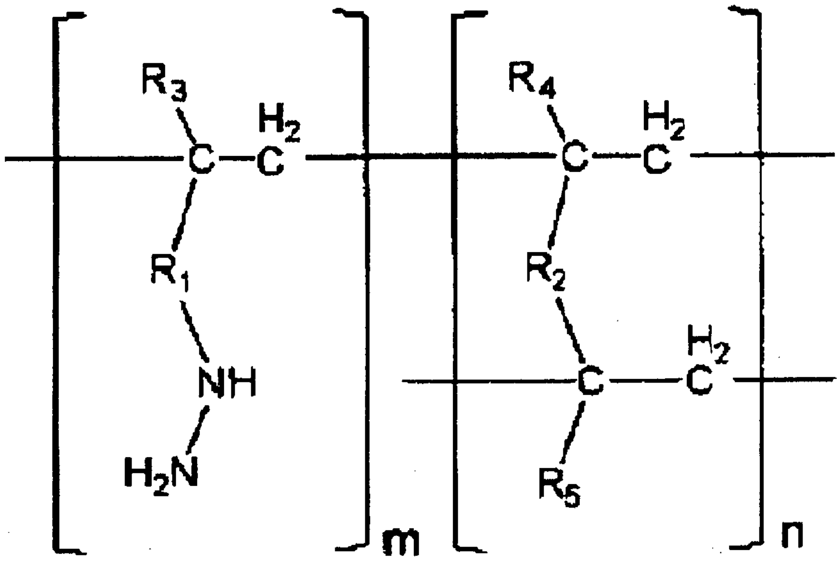

(Each of $R_1$ and $R_2$ represents a hydrocarbon chain of 1 to 20 carbon atoms which may be interrupted by -O-, -S-, -NH-, -CO-, or -CONH-; each of $R_3$, $R_4$, and $R_5$ represents H, $CH_3$, or a hydrocarbon chain of 2 to 5 carbon atoms; and each of m and n represents the number of monomer units.)

(10) The method according to (9), wherein the polymer particle has a crosslinked polymer structure represented by (Formula 2) below.

(Formula 2)

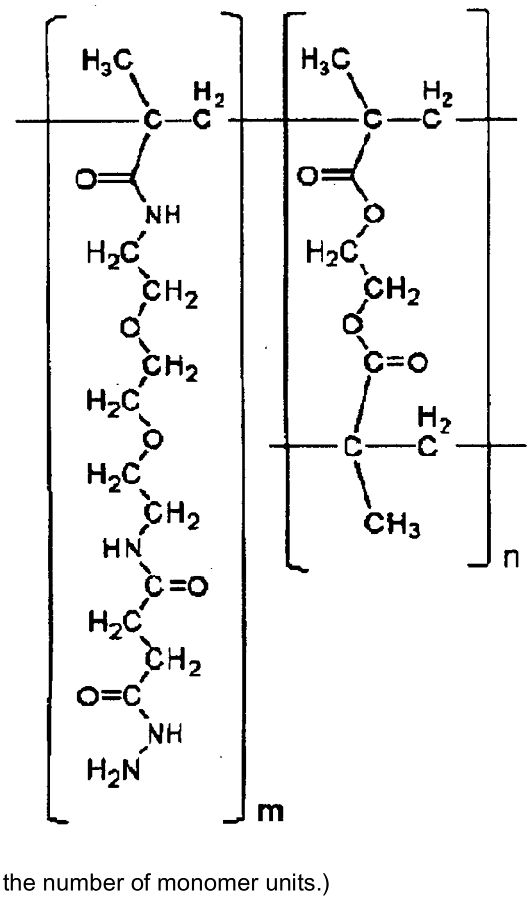

(Each of m and n represents the number of monomer units.)

(11) The method according to any one of (6) to (10), wherein the surfactant is sorbitan monostearate, sorbitan tristearate, or sodium lauryl sulfate.

(12) A method for preparing a sugar chain sample, comprising the processes of:

(a) bringing a sample containing a sugar chain into contact with the polymer particle according to any one of (1) to (5) to allow the polymer particle to capture the sugar chain;

(b) washing the polymer particle capturing the sugar chain; and (c) liberating the sugar chain from the polymer particle capturing the sugar chain.

(13) A method for analyzing a sugar chain in a sample, comprising the processes of: (a) bringing a sample containing a sugar chain into contact with the polymer particle according to any one of (1) to (5) to allow the polymer particles to capture the sugar chain; (b) washing the polymer particle capturing the sugar chain; and (c) liberating the sugar chain from the polymer particle capturing the sugar chain; and (d) analyzing the liberated sugar chain.

Advantageous Effects of Invention

In the polymer particle having a functional group for capturing sugar chains according to the present invention, it is possible to suppress the aggregation of the polymer particle under a high-temperature condition without deteriorating the sugar chain-capturing ability thereof.

Brief Description of Drawings

FIG. 1 is a graph showing the total peak areas calculated from HPLC charts obtained in Examples 1 and 4 and Comparative Examples 1 and 2.

FIG. 2 is a graph showing the area ratios of the respective peaks detected by HPLC charts obtained in Examples 1 and 4 and Comparative Examples 1 and 2.

FIG. 3 is a graph showing the evaluation results of sugar chain capturing performance.

Description of Embodiments

«Composition»

In an embodiment of the present invention, a composition is provided, comprising: polymer particles having a functional group for capturing a sugar chain, wherein the rate of change of mass calculated by Equation (F1) below is more than 90% and less than 112%. In Equation (F1), A represents the mass of the composition after incubation for 4 hours under an environment of a relative humidity of 50% and a temperature of 25°C, and B represents the mass of the composition before the incubation.

$$\text{Rate of change (\%)} = A/B \times 100 \text{ --- (F1)}$$

The present inventors found that, in the composition in which the rate of change of mass calculated by Equation (F1) above is within the above range, the aggregation of polymer particles in the composition under a high-temperature condition is suppressed. Based on the finding, the present invention has been completed.

The rate of change of mass calculated by Equation (F1) above may be, for example, more than 95% and less than 112%, more than 100% and less than 112%, more than 105% and less than 112%, more than 90% and less than 110%, more than 95% and less than 110%, more than 100% and less than 110%, and more than 105% and less than 110%.

In the composition in which the rate of change of mass is within the above range, the reason why the agglomeration of the polymer particles under a high-temperature condition is suppressed is presumed as follows by the present inventors. That is, there are many cases in which a functional group capable of reacting with a sugar chain represented by a hydrazide group or an aminooxy group is hydrophilic. Thus, the polymer particles having the functional group for capturing a sugar chain easily absorb moisture in the air. In this case, it is presumed that some of the water molecules in the moisture absorbed in the polymer particles are adsorbed on the surface of the polymer particles, and thus the polymer particles are aggregated by hydrogen bonds through these water molecules during storage at high temperature.

Therefore, it is considered that the aggregation of the polymer particles is suppressed by reducing the amount of moisture absorbed in the polymer particles, particularly, the amount of water molecules adsorbed on the surface of the polymer particles.

As an example of a configuration for achieving a case of the rate of change of mass being within the above range, a configuration in which the composition contains a surfactant is exemplified. In this case, it is preferable that the surfactant coat the polymer particle. Here, the "coating" means that the surfactant adheres to at least a part of the surface of the polymer particle.

As the "polymer particle", solid particles or gel particles can be preferably used. If such polymer particles are used, these polymer particles can be easily recovered by means such as centrifugation or filtration after allowing the polymer particles to capture a sugar chain. In addition, the polymer particles can also be used in a state of filling a column. The method of using the polymer particles in the state of filling the column is particularly important from the viewpoint of continuous operation. A plurality of samples can be treated at the same time by using a filter plate (for example, Multiscreen Solvinert Filter Plate manufactured by Millipore Corporation) as a reaction container. In this case, for example, the throughput of purification can be greatly improved in comparison with conventional purification means by a column operation typified by gel filtration. If magnetic beads are used as the polymer particles, these beads are collected on the wall surface of a container by a magnetic force, and thus the washing of the beads can be easily carried out.

The shape of the polymer particle is not particularly limited, but preferably a sphere or a shape similar thereto is preferable. In the case where the polymer particle is spherical, the average particle diameter thereof is preferably 0.05 μm to 1000 μm, more preferably 0.05 μm to 200 μm, further more preferably 0.1 μm to 200 μm, and most preferably 0.1 μm to 100 μm. If the average particle diameter thereof is less than the lower limit value, when the polymer particles are used in a state of filling a column, liquid permeability easily deteriorates, and thus it is necessary to apply a large pressure. In addition, it becomes difficult to recover the polymer particles by centrifugation or filtration. If the average particle diameter thereof exceeds the upper limit value, the contact area of the polymer particles and the sample solution becomes small, and the efficiency of capturing sugar chains is lowered. In addition, it becomes difficult to suck the polymer particles with a pipette or the like.

In the above-described composition, the rate of change of the average particle diameter of the polymer particles in the composition, calculated by Equation (F2) below, is preferably 90% to 120%, 95% to 110%, or 95% to 105%. In Equation (F2), C represents the average particle diameter of the polymer particles in the composition, measured by a laser diffraction/scattering type particle size analyzer after the heat-retaining treatment of the composition at 60°C for 3 days under a drying condition and suspending the composition in water, and D represents the average particle diameter of the polymer particles in the composition, measured by a laser diffraction/scattering type particle size analyzer before the heat-retaining treatment of the composition and suspending the composition in water.

$$\text{Rate of change (\%)} = C/D \times 100 \text{ --- (F2)}$$

Here, the "drying condition" may be a state in which the target composition is dried in a vacuum at about 23°C for 12 hours or more, and then tightly sealed in an aluminum bag together with a silica gel desiccant. The composition sealed in the aluminum bag in this way is heat-retained at 60°C for 3 days, and then the above-described measurement may be performed.

As the "functional group for capturing a sugar chain" in the polymer particle, a hydrazide group or an aminooxy group is preferable. This functional group reacts with an aldehyde group of a sugar chain to be able to capture the sugar chain by a hydrazide bond or an oxime bond. In the present invention, a hydrazide group is particularly preferable.

The polymer particle having a hydrazide group is not limited as long as it satisfies Equation (F1) above, but is preferably a particle having a crosslinked polymer structure represented by Formula (1) below.

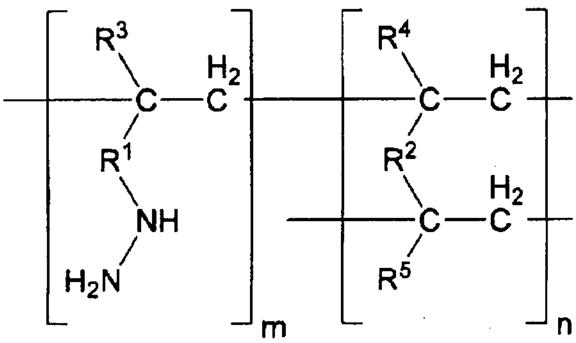

(1)

In Formula (1), each of $R^1$ and $R^2$ represents a hydrocarbon chain of 1 to 20 carbon atoms which may be interrupted by -O-, -S-, -NH-, -CO-, or -CONH-; and each of $R^3$, $R^4$, and $R^5$ represents H, $CH_3$, or a hydrocarbon chain of 2 to 5 carbon atoms. Further, each of m and n represents the number of monomer units, and the ratio of m and n is m:n = 99:1 to 70:30.

It is preferable that the above-described crosslinked polymer structure be represented by Formula (2) below.

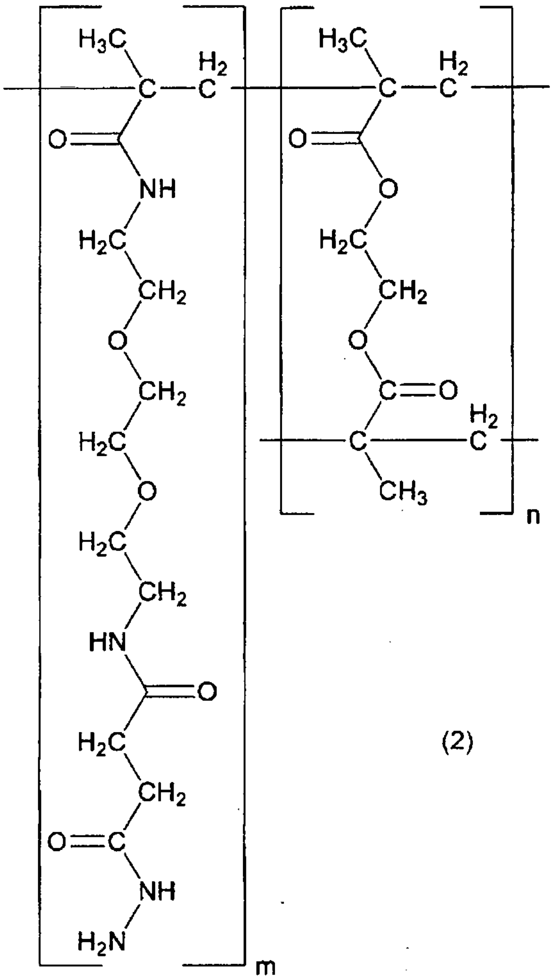

(2)

In Formula (2), each of m and n represents the number of monomer units, and the ratio of m and n satisfies m:n = 99:1 to 70:30.

As a method for preparing the polymer particle having the above-described structure, as described in the present embodiment, a method using a suspension polymerization reaction or a method using a reverse phase suspension polymerization reaction may be exemplified. The basic reaction process, for example, is described in PCT International Publication No. WO 2008/018170.

In an embodiment, as described above, the polymer particle of the present invention is characterized by being coated with a surfactant. Thus, the hygroscopicity of the polymer particles can be significantly reduced, and the aggregation of the polymer particles under a high-temperature condition can be significantly suppressed. Therefore, in an embodiment, the present invention provides a method of reducing the hygroscopicity of the polymer particles having a functional group for capturing a sugar chain, which is characterized by coexistence of the polymer particles and the surfactant, and a method of suppressing the aggregation of the polymer particles having a functional group for capturing a sugar chain under a high-temperature condition, which is characterized by coexistence of the polymer particles and the surfactant. The "high-temperature condition" when evaluating the aggregation of the polymer particles of the present invention is typically 60°C.

The coexistence of the polymer particles and the surfactant means that the polymer particles and the surfactant exist together in a state where the surfactant has an influence on the contact of the polymer particles. For example, the surfactant may adhere to the surface of the polymer particles, and the polymer particles may also be coated with the surfactant.

The surfactant coexisting with the polymer particles is not particularly limited as long as it imparts the above-described characteristics to the polymer particles. The surfactant can be suitably selected from various types of surfactants, such as nonionic surfactants, anionic surfactants, cationic surfactants, and amphoteric surfactants. It is preferable that the surfactant be solid at room temperature in terms of operability of the polymer particles after treatment with the surfactant.

Preferable examples of the surfactant include: sorbitan fatty acid esters, such as sorbitan monostearate, sorbitan tristearate, sorbitan monooleate, sorbitan monoisostearate, sorbitan monolaurate, sorbitan monopalmitate, sorbitan sesquioleate, sorbitan trioleate, penta-2-ethylhexyl acid diglycerolsorbitan, and tetra-2-ethylhexyl acid diglycerolsorbitan; POE-sorbitan fatty acid esters, such as polyoxyethylene (POE)-sorbitan monooleate, POE-sorbitan monostearate, POE-sorbitan monooleate, and POE-sorbitan tetraoleate; glycerin fatty acid esters, such as mono cottonseed oil fatty acid glycerin, monoerucic acid glycerin, sesquioleic acid glycerin, monostearic acid glycerin, and monooleic acid glycerin; POE-glycerin fatty acid esters, such as POE-glycerin monostearate, POE-glycerin monoisostearate, and POE-glycerin triisostearate; POE-fatty acid esters, such as POE-monooleate, POE-distearate, POE-monodioleate, and ethylene glycol distearate; POE-alkyl ethers, such as POE-lauryl ether, POE-oleyl ether, POE-stearyl ether, POE-behenyl ether, POE-2-octyldodecyl ether, and POE-cholestanol ether; pluronic type surfactants, such as pluronic; POE-polyoxypropylene (POP)-alkyl ethers, such as POE/POP-2-decyltetradecyl ether, POE/POP-monobutyl ether, POE/POP-hydrogenated lanolin, and POE/POP-glycerin ether; tetraPOE/tetraPOP-ethylenediamine condensates, such as tetronic; POE-castor oil derivatives and POE-cured castor oil derivatives, such as POE-castor oil, POE-cured castor oil, POE-cured castor oil monoisostearate, POE-cured castor oil triisostearate, POE-cured castor oil monopyroglutamic acid monoisostearic acid diester, and POE-cured castor oil maleic acid; POE-beeswax·lanolin derivatives, such as POE-sorbeth-beeswax; polyglycerin fatty acid esters, such as POE-propylene glycol fatty acid ester, POE-alkyl amines, POE-fatty acid amides, sucrose fatty acid ester, POE-nonylphenyl formaldehyde condensate, an alkyl ethoxydimethylamine oxide, trioleyl phosphate, polyglyceryl sesquicaprylate, polyglyceryl dicaprylate, polyglyceryl monolaurate, polyglyceryl monostearate, polyglyceryl monooleate, polyglyceryl distearate, and polyglyceryl dioleate; modified silicones, such as methylpolysiloxane·cetylmethylpolysiloxane·poly(oxyethylene·oxypropylene)methylpol ysiloxane copolymers; nonionic surfactants, such as cured castor oil derivatives, glycerin alkyl ethers, and decylglucosides; anionic surfactants, such as sodium lauryl sulfate, sodium stearyl sulfate, sodium myristyl sulfate, sodium stearate, sodium laurate, sodium myristate, sodium stearylsulfonate, sodium lauryl sulfonate, and sodium dioctylsulfosuccinate; cationic surfactants, such as stearyltrimethyl ammonium chloride and lauryl pyridinium chloride; and various amphoteric surfactants including imidazoline-based amphoteric surfactants, such as 2-undecyl-N,N,N-(hydroxyethylcarboxymethyl)-2-imidazoline sodium, and betaine-based amphoteric surfactants, such as alkyl betaine (such as lauryldimethylamino acetatebetaine, cocamidopropylbetaine, and lauryl betaine), amide betaine, sulfobetaine, and coco betaine. These surfactants can be used alone or in a combination of two or more.

Among these, sorbitan monostearate, sorbitan tristearate, and sodium lauryl sulfate are particularly preferable from the viewpoint of the balance between good operability and moisture absorption suppressing effect after treatment.

In the method of reducing the hygroscopicity of the polymer particles having a functional group for capturing sugar chains and the method of suppressing the aggregation of the polymer particles having a functional group for capturing sugar chains, the polymer particles are the same as those in the above-described composition containing polymer particles and a surfactant. That is, it is preferable that the functional group for capturing sugar chains be a hydrazide group, and the polymer particle have a crosslinked polymer structure represented by Formula (1) below.

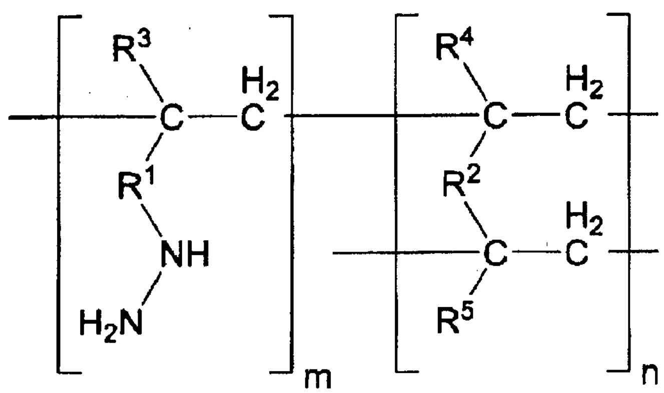

(1)

In Formula (1), each of $R^1$ and $R^2$ represents a hydrocarbon chain of 1 to 20 carbon atoms which may be interrupted by -O-, -S-, -NH-, -CO-, or -CONH-; each of $R^3$, $R^4$, and $R^5$ represents H, $CH_3$, or a hydrocarbon chain of 2 to 5 carbon atoms; and m:n = 99:1 to 70:30 is satisfied.

It is particularly preferable that crosslinked polymer structure be represented by Formula (2) below.

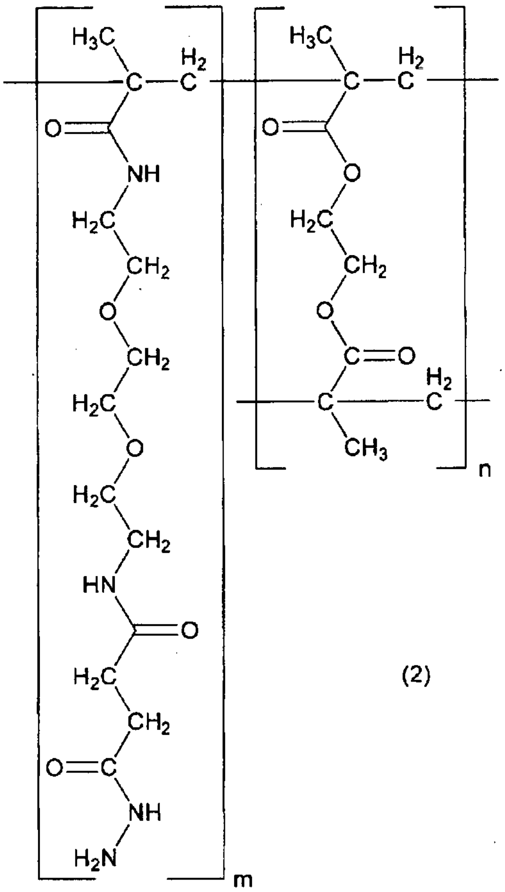

(2)

In Formula (2), m:n = 99:1 to 70:30 is satisfied.

«Method for preparing composition»

In an embodiment, the present invention provides a method for preparing a composition, including: a mixing process of mixing polymer particles having a functional group for capturing a sugar chain with a liquid containing a surfactant and a solvent; and a drying process of removing the solvent.

<Mixing process and drying process>

The coating of polymer particles with a surfactant, as described in the present embodiment, can be simply carried out by dispersing the polymer particles in a solution of the surfactant and then removing the solvent to dry the polymer particles.

In the preparation method of the present embodiment, the surfactant is preferably a sorbitan fatty acid ester or an anionic surfactant.

The concentration of the surfactant solution in the liquid containing a surfactant and a solvent may be 0.01% to 10 w/v%, and may also be 0.1 % to 5%.

As the solvent in the liquid containing a surfactant and a solvent, a solvent having a boiling point of 130°C or lower is preferable, from the viewpoint of being easily removed later. Examples of the solvent include water; alcohols, such as methanol, ethanol, propanol, and isopropanol; hydrocarbons, such as pentane, hexane, and cyclohexane; esters, such as ethyl acetate, propyl acetate, and butyl acetate; and ethers, such as diethyl ether and tetrahydrofuran. These solvent may be used alone, and may also be used in a combination of two or more.

<Polymer particle synthesis process>

In the preparation method of the present embodiment, the polymer particles may be polymer particles prepared

by a polymer particle synthesis process in which (A1) a carboxylic acid ester monomer containing a polymerizable group or (A2) a monomer containing a polymerizable group and a hydrazyl group or oxylamino group protected with a protective group [P] and (B) a crosslinking agent are polymerized to synthesize (C) the polymer particles. The polymer particle synthesis process is preferably performed in a water-in-oil emulsion from the viewpoint of improving the yield of the polymer particles, but can also be performed in an oil-in-water emulsion.

[Carboxylic acid ester monomer containing polymerizable group (A1)]

As the carboxylic acid ester monomer containing a polymerizable group (A1) (hereinafter, referred to as "monomer (A1)"), which is used in the preparation method of the present embodiment, a monomer represented by Formula (3) below is exemplified.

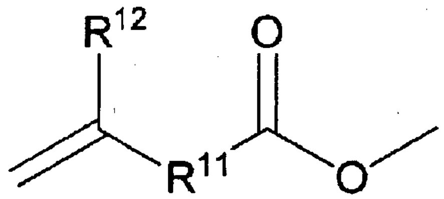

(3)

[In Formula (3), $R^{11}$ represents a hydrocarbon chain of 1 to 20 carbon atoms which may be interrupted by at least one selected from the group consisting of -O-, -S-, -NH-, -CO-, and -CONH-; and $R^{12}$ represents H, $CH_3$, or a hydrocarbon chain of 2 to 5 carbon atoms.]

In Formula (3), R" is represented by Formula (4) or (5) below. In Formula (4) or (5) below, each of a, b, and d represents an integer of 1 to 5, and c represents an integer of 1 to 10.

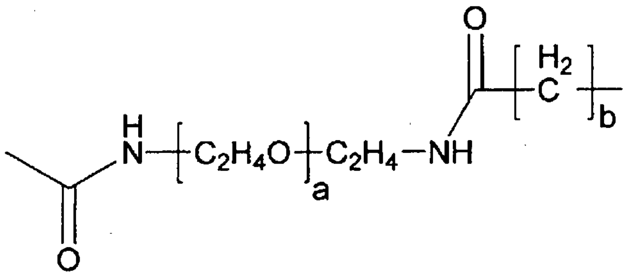

(4)

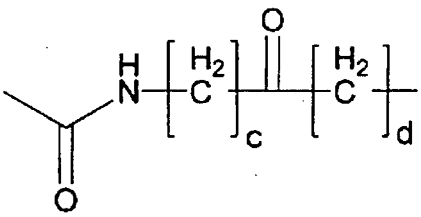

(5)

As the compound of Formula (3) above, a compound represented by Formula (6) below is exemplified.

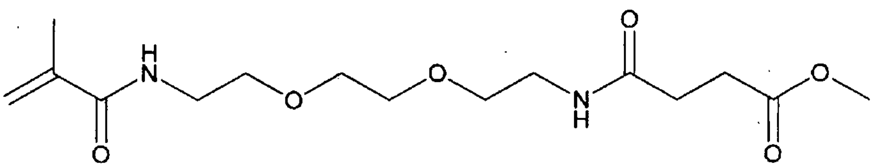

(6)

The content of the monomer (A1) in a reaction solution before a polymerization reaction is 5 mmol to 50 mmol, 5 mmol to 30 mmol, or 10 mmol to 20 mmol, with respect to 100 mL of a solvent. The monomer (A1) can be used alone or in a mixture of two or more.

In the case where the preparation method of the present embodiment is performed using the monomer (A1), after the polymerization reaction, a process of applying a hydrazide group to the obtained polymer particles (C) is

performed. The process of applying a hydrazide group to the polymer particles (C) is performed by treating the polymer particles (C) obtained by the polymerization reaction with a hydrazine solution. The concentration of hydrazine in the hydrazine solution is 10 vol% or more, 30 vol% or more, 80 vol% or more, 90 vol% or more, or 98 vol% or more.

[Monomer (A2) containing polymerizable group and hydrazyl group or oxylamino group protected with protective group [P]]

The monomer (A2) containing a polymerizable group and a hydrazyl group or oxylamino group protected with a protective group [P] (hereinafter, referred to as "monomer (A2)"), which is used in the present embodiment, contains a polymerizable group, and contains a hydrazyl group or oxylamino group protected with a protective group [P]. As the monomer (A2), a monomer represented by Formula (7) or (8) below is exemplified.

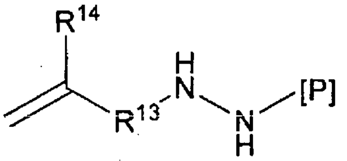
(7)

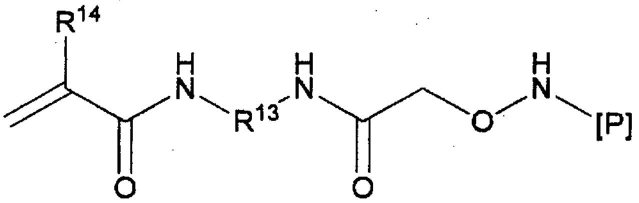
(8)

[In Formula (7) or (8), $R^{13}$ represents a hydrocarbon chain of 1 to 20 carbon atoms which may be interrupted by at least one selected from the group consisting of -O-, -S-, -NH-, -CO-, and -CONH-; $R^{14}$ represents H, $CH_3$, or a hydrocarbon chain of 2 to 5 carbon atoms; and [P] represents a protective group.]

In Formula (7), $R^{13}$ is represented by Formula (9) or (10) below. In Formula (9) or (10) below, each of e, f, and h represents an integer of 1 to 5; and g represents an integer of 1 to 10.

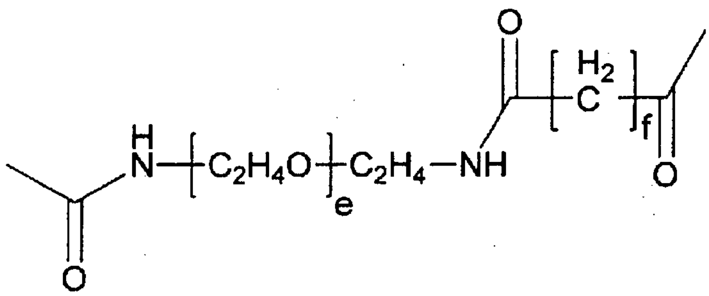
(9)

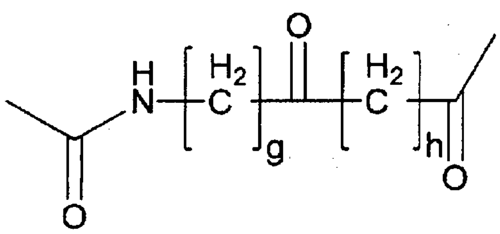
(10)

In Formula (8), $R^{13}$ is represented by Formula (11) or (12) below. In Formula (11) or (12) below, each of i and k represents an integer of 1 to 5; and j represents an integer of 1 to 10.

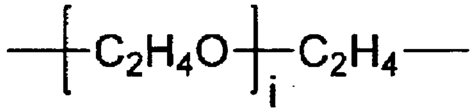
(11)

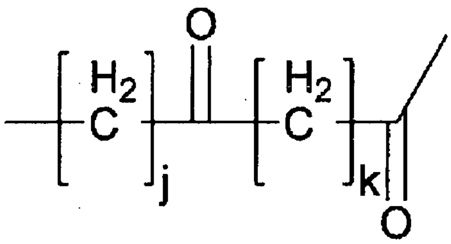

(12)

As the compound represented by Formula (7) or (8), a compound represented by Formula (13) or (14) below is exemplified.

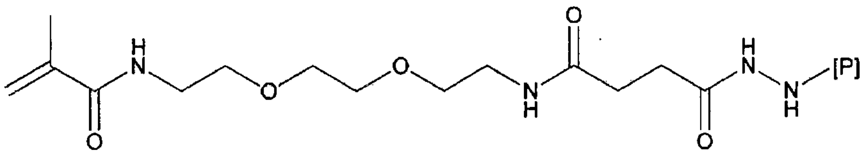

(13)

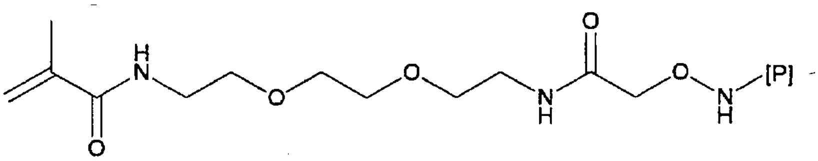

(14)

The content of the monomer (A2) in a reaction solution before a polymerization reaction is 5 mmol to 50 mmol, 5 mmol to 30 mmol, or 10 mmol to 20 mmol, with respect to 100 mL of a solvent.

Examples of the protective group [P] include a 9-fluorenylmethyloxycarbonyl group (Fmoc), a tert-butoxycarbonyl group (Boc), a benzyloxycarbonyl group (Cbz), a 2,2,2-trichloroethoxycarbonyl group (Troc), an allyloxycarbonyl group (Alloc), 4-methoxytrityl group (Mmt), an amino group, an alkyl group of 3 to 20 carbon atoms, a 9-fluorene acetyl group, a 1-fluorene carboxylic acid group, a 9-fluorene carboxylic acid group, a 9-fluorenone-1-carboxylic acid group, a benzyloxycarbonyl group, a xanthyl group (Xan), a trityl group (Trt), a 4-methyltrityl group (Mtt), a 4-methoxy 2,3,6-trimethyl-benzenesulfonyl group (Mtr), a mesitylene-2-sulfonyl group (Mts), a 4,4-dimethoxybenzhydryl group (Mbh), a tosyl group (Tos), a 2,2,5,7,8-pentamethylchromane-6-sulfonyl group (Pmc), a 4-methyl benzyl group (MeBzl), a 4-methoxybenzyl group (MeOBzl), a benzyloxy group (BzlO), a benzyl group (Bzl), a benzoyl group (Bz), a 3-nitro-2-pyridine sulfenyl group (Npys), a 1-(4,4-dimethyl 2,6-dioxocyclohexylidene)ethyl group (Dde), a 2,6-dichlorobenzyl group (2,6-DiCl-Bzl), a 2-chlorobenzyloxycarbonyl group (2-Cl-Z), a 2-bromobenzyloxycarbonyl group (2-Br-Z), a benzyloxymethyl group (Bom), a cyclohexyloxy group (cHxO), a t-butoxymethyl group (Bum), a t-butoxy group (tBuO), a t-butyl group (tBu), an acetyl group (Ac), a trifluoroacetyl group (TFA), an o-bromobenzyloxycarbonyl group, a t-butyl dimethyl silyl group, a 2-chlorobenzyl group (Cl-z), a cyclohexyl group, a cyclopentyl group, an isopropyl group, a pivalyl group, a tetrahydropyran-2-yl group, and a trimethylsilyl group.

The monomer (A2), for example, is a compound represented by Formula (15) below.

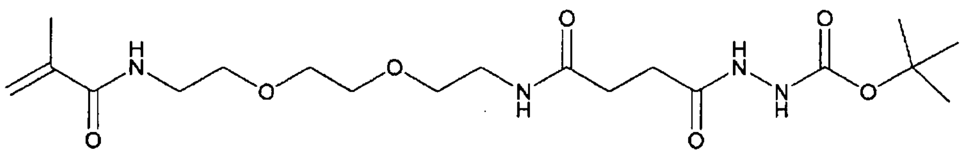

(15)

In the case where the preparation method of the present embodiment is performed using the monomer (A2), after the polymerization reaction, the protective group [P] of the obtained polymer particle (C) is deprotected. The deprotection can be performed by a commonly known method depending on the kind of the protective group.

[Crosslinking agent (B)]

As the crosslinking agent (B), a polyfunctional compound, which is a compound copolymerizable with a carboxylic acid ester monomer, can be suitably used. Examples thereof include:

(1) di- or tri- (meth)acrylic acid esters of polyols, for example, di- or tri-(meth)acrylic acid esters of ethylene glycol, propylene glycol, trimethylolpropane, glycerine, polyoxyethylene glycol, polyoxypropylene glycol, and polyglycerin;
(2) (1) in which the unsaturated acid is other than (meth)acrylic acid, for example, maleic acid and fumaric acid;
(3) bisacrylamides, for example, N,N'-methylenebisacrylamide;
(4) di- or tri- (meth)acrylic acid esters obtained by reacting polyepoxide and (meth)acrylic acid;
(5) di(meth)acrylic acid carbamyl esters obtained by reacting polyisocyanate and (meth)acrylic acid hydroxy ester, for example, di(meth)acrylic acid carbamyl esters obtained by reacting polyisocyanate and (meth)acrylic acid hydroxy ester in which polyisocyanates are tolylenediisocyanate and hexamethylenediisocyanate; and
(6) polyvalentallyl compounds, for example, allylated starch, allylated cellulose, diallyl phthalate, tetraallyloxy ethane, pentaerythritol triallyl ether, trimethylolpropane triallyl ether, diethylene glycol diallyl ether, and triallyl trimellitate.

Examples of the crosslinking agent (B) may include ethylene glycol di(meth)acrylate, propylene glycol di(meth)acrylate, and N,N'-methylenebis(meth)acrylamide.

The content of the crosslinking agent (B) in a reaction solution before a polymerization reaction is 1 mol% to 30 mol%, 3 mol% to 20 mol%, or 3 mol% to 15 mol%, with respect to the monomer (A1 or A2).

The addition timing of the crosslinking agent (B) to a polymerization reaction system is not particularly limited, and the crosslinking agent (B) can be added at any time of before polymerization, during polymerization, and after polymerization.

[Polymerization reaction (polymerization in a water-in-oil emulsion)]

In the preparation method of the present embodiment, the "polymerization in a water-in-oil emulsion" refers to reverse phase suspension polymerization. The reverse phase suspension polymerization refers to a method of performing water-in-oil suspension polymerization by dispersing or suspending a water phase containing a water-soluble monomer, if necessary, other monomers, a crosslinking agent and a polymerization initiator in an oil phase containing a hydrophobic organic solvent inactive in polymerization. The polymerization reaction can be performed in a water-in-oil emulsion after forming the water-in-oil emulsion by dispersing a mixture containing (A1) a carboxylic acid ester monomer containing a polymerizable group or (A2) a monomer containing a polymerizable group and a hydrazyl group or oxylamino group protected with a protective group [P], (B) a crosslinking agent, water, and a polymerization initiator in an organic solvent.

(Organic solvent)

The organic solvent is a hydrophobic organic solvent inactive in polymerization. Since the organic solvent is used to disperse a mixture containing (A1) a carboxylic acid ester monomer containing a polymerizable group or (A2) a monomer containing a polymerizable group and a hydrazyl group or oxylamino group protected with a protective group [P], (B) a crosslinking agent, water and a polymerization initiator, this organic solvent can be referred to as an organic dispersion medium. Examples of the organic solvent that can be used in the preparation method of the present embodiment include aliphatic hydrocarbons, alicyclic hydrocarbons, aromatic hydrocarbons, aliphatic alcohols, aliphatic ketones, and aliphatic esters. As the aliphatic hydrocarbons, aliphatic hydrocarbons of 5 carbon atoms or more, such as n-pentane, n-hexane, and n-heptane, are exemplified. As the alicyclic hydrocarbons, alicyclic hydrocarbons of 5 carbon atoms or more, such as cyclopentane, methylcyclopentane, cyclohexane, and methylcyclohexane, are exemplified. As the aromatic hydrocarbons, benzene derivatives, such as benzene, toluene, and xylene, are exemplified. As the aliphatic alcohols, aliphatic alcohols of 4 carbon atoms or more or 4 to 6 carbon atoms, such as n-butyl alcohol and n-amyl alcohol, are exemplified. As the aliphatic ketones, aliphatic ketones of 4 carbon atoms or more or 4 to 6 carbon atoms, such as methyl ethyl ketone, are exemplified. As the aliphatic esters, aliphatic esters of 4 carbon atoms or more or 4 to 6 carbon atoms, such as ethyl acetate, are exemplified. The organic solvent that can be used in the preparation method of the present embodiment can be used alone or in a mixture of two or more.

The amount of the organic solvent used is not particularly limited, and can be suitably set depending on the amount of the monomer (A1 or A2). The amount of the organic solvent used is 500 parts by mass to 5000 parts by mass or 500 parts by mass to 3000 parts by mass with respect to 100 parts by mass of the monomer (A1 or A2).

(Polymerization initiator)

The polymerization initiator is not particularly limited as long as it is used in this system, but is a water-soluble radical polymerization initiator. Examples of the polymerization initiator include: (1) hydrogen peroxide; (2) persulfates, such as sodium persulfate, potassium persulfate, and ammonium persulfate; (3) perchlorates, such as potassium perchlorate, and sodium perchlorate; (4) halogen acid salts, such as potassium chlorate and potassium bromate; (5) peroxides, such as t-butyl hydroperoxide, cumene hydroperoxide, dialkyl peroxide (di-t-butyl peroxide, t-butyl cumyl peroxide,

and the like); (6) ketone peroxides, such as methyl ethyl ketone peroxide and methyl isobutyl ketone peroxide; (7) alkyl peroxy esters, such as t-butyl peroxy acetate, t-butyl peroxyisobutyrate, and t-butyl peroxypivalate; and (8) azo compounds, such as azobisisobutyronitrile and 2,2'-azobis(N,N'-dimethylene isobutyl amidine)dihydrochloride.

The amount of the polymerization initiator used can be suitably set depending on the condition of polymerization. The amount of the polymerization initiator used is 0.005 parts by mass to 20 parts by mass, 0.01 parts by mass or greater and 10 parts by mass, 0.02 parts by mass to 10 parts by mass, or 0.05 parts by mass to 5 parts by mass, with respect to 100 parts by mass of the monomer (A1 or A2). The method of adding the polymerization initiator is not particularly limited. The polymerization initiator may be added to a solvent separately from the monomer (A1 or A2). The polymerization initiator may also be added to a solution of the monomer (A1 or A2) in advance to prepare a polymerization initiator-containing solution, and this solution may be added to a solvent.

(Dispersion stabilizer)

When carrying out the polymerization, it is preferable to include a dispersion stabilizer in a solvent. As the dispersion stabilizer, a dispersion stabilizer having a HLB of 3 to 10 or 3 to 9 is exemplified.

In the case where the polymerization reaction is performed in an organic solvent, an oil-soluble dispersion stabilizer is preferable, and examples thereof include sorbitan fatty acid esters (sorbitan monostearate, sorbitan monolaurate, sorbitan, sorbitan monooleate, and sorbitan tristearate), and sucrose fatty acid esters (mono-, di-, or tri-esters of sucrose and fatty acids such as stearic acid, palmitic acid, lauric acid, and oleic acid).

The dispersion stabilizer can be used alone or in a mixture of two or more.

The amount of the dispersion stabilizer used is not particularly limited, and can be suitably selected depending on the condition of polymerization. The amount of the dispersion stabilizer used is 0.1 parts by mass to 20 parts by mass, 0.1 parts by mass to 15 parts by mass, or 0.1 parts by mass to 10 parts by mass, with respect to 100 parts by mass of the monomer (A1 or A2).

In the reverse phase suspension polymerization reaction, polymerization is performed by suspending the water-in-oil emulsion in which a mixture containing (A1) a carboxylic acid ester monomer containing a polymerizable group or (A2) a monomer containing a polymerizable group and a hydrazyl group or oxylamino group protected with a protective group [P], (B) a crosslinking agent, water, and a polymerization initiator is dispersed in an organic solvent while blowing $N_2$ gas in a reaction tank. The formation and suspension of the water-in-oil emulsion may be simultaneously performed, and the formation of the water-in-oil emulsion may be performed in advance. Each of the components may be mixed in a total amount before the polymerization reaction, and may also be added and mixed with stirring a part or total thereof. In the polymerization reaction conditions, temperature is 50°C to 90°C or 60°C to 80°C, and time is 0.5 hours to 24 hours or 1 hour to 20 hours.

[Polymerization reaction (polymerization in an oil-in-water emulsion)]

The polymerization reaction may be performed in an oil-in-water emulsion after forming the oil-in-water emulsion by dispersing a mixture containing (A1) a carboxylic acid ester monomer containing a polymerizable group or (A2) a monomer containing a polymerizable group and a hydrazyl group or oxylamino group protected with a protective group [P], (B) a crosslinking agent, an organic solvent, and a polymerization initiator in water.

In the case where the polymerization reaction is performed in the oil-in-water emulsion, for example, a mixture containing (A1) a carboxylic acid ester monomer containing a polymerizable group or (A2) a monomer containing a polymerizable group and a hydrazyl group or oxylamino group protected with a protective group [P], (B) a crosslinking agent, an organic solvent, and a polymerization initiator is put into a reaction tank while stirring a solvent with blowing $N_2$ gas in the solvent in the reaction tank to form monomer droplets, and then the polymerization reaction may be performed at 50°C to 90°C or 60°C to 80°C for 0.5 hours to 24 hours or 1 hour to 20 hours.

(Polymerization initiator)

As the polymerization initiator, a radical polymerization initiator is exemplified. The polymerization initiator is not particularly limited within a range in which objects of the present invention can be attained, but azo-based polymerization initiators, such as 2,2'-azobisisobutyronitrile (AIBN), 2,2'-azobis-(2-methylpropanenitrile), 2,2'-azobis-(2,4-dimethylpentanenitrile), 2,2'-azobis-(2-methylbutanenitrile), 1,1'-azobis-(cyclohexanecarbonitrile), 2,2'-azobis-(2,4-dimethyl-4-methoxyvaleronitrile), and 2,2'-azobis-(2,4-dimethylvaleronitrile), can be mainly exemplified. In addition, an organic peroxide-based polymerization initiator can also be applied to the present invention. Specific examples of the organic peroxide-based polymerization initiator may include peroxy esters, such as t-butyl peroxypivalate, t-butyl peroxy 2-ethyl hexanoate, and cumylperoxy 2-ethyl hexanoate; and diacyl peroxides, such as di-3,5,5-trimethyl hexanoyl peroxide and dilauroyl peroxide. The radical polymerization initiator may be used alone, and may also be used by suitably

mixing two or more thereof.

The amount of the polymerization initiator used can be suitably set depending on the condition of polymerization. The amount of the polymerization initiator used is 0.005 parts by mass to 20 parts by mass, 0.01 parts by mass to 10 parts by mass, 0.02 parts by mass to 10 parts by mass, or 0.05 parts by mass to 5 parts by mass, with respect to 100 parts by mass of the monomer (A1) or (A2). The method of adding the polymerization initiator is not particularly limited. The polymerization initiator may be added to a solvent separately from the monomer (A1) or (A2). The polymerization initiator may also be added to a solution of the monomer (A1) or (A2) in advance to prepare a polymerization initiator-containing solution, and this solution may be added to a solvent.

(Dispersion stabilizer)

In the case where the polymerization reaction is performed in water, examples of the dispersion stabilizer include cellulose derivatives, such as polyvinyl alcohol, methyl cellulose, ethyl cellulose, hydroxymethyl cellulose, hydroxypropyl methyl cellulose, hydroxybutyl methyl cellulose, hydroxyethyl cellulose, carboxymethyl cellulose, aminomethylhydroxypropyl cellulose, and aminoethylhydroxypropyl cellulose; starch, tragacanth, pectin, glue, and alginic acid or salts thereof; gelatin, polyvinyl pyrrolidone, polyacrylic acid or salts thereof, polymethacrylic acid or salts thereof; polyacrylamide and polymethacrylamide; copolymers of vinyl acetate and unsaturated acids, such as maleic acid, maleic anhydride, acrylic acid, methacrylic acid, itaconic acid, fumaric acid, and crotonic acid; copolymers of styrene and the unsaturated acids; copolymers of vinyl ether and the unsaturated acids; and salts or esters of the copolymers. The dispersion stabilizer can be used alone or in a mixture of two or more.

The amount of the dispersion stabilizer used is not particularly limited, and can be suitably selected depending on the condition of polymerization. The amount of the dispersion stabilizer used is 0.1 parts by mass to 20 parts by mass, 0.1 parts by mass to 15 parts by mass, or 0.1 parts by mass to 10 parts by mass, with respect to 100 parts by mass of the monomer (A1) or (A2).

[Polymer particle (C)]

In the case where polymerization is performed using (A1) a carboxylic acid ester monomer containing a polymerizable group, as the polymer particles (C), polymer particles having a carboxylic acid ester can be obtained. Therefore, the preparation method of the present embodiment can be said to be a method for preparing "polymer particles having a carboxylic acid ester".

Polymer particles having a hydrazide group can be prepared by performing a process of applying a hydrazide group to the polymer particles (C) obtained in this way. As the method of applying a hydrazide group to the polymer particles (C), the above-mentioned method is exemplified.

In the case where polymerization is performed using (A2) a monomer containing a polymerizable group and a hydrazyl group protected with a protective group [P], as the polymer particles (C), polymer particles having a hydrazyl group protected with a protective group [P] can be obtained. Therefore, the preparation method of the present embodiment can be said to be a method for preparing "polymer particles having a hydrazyl group protected with a protective group [P]".

Polymer particles having a hydrazide group can be prepared by deprotecting the polymer particles (C) obtained in this way. As the method of deprotecting the polymer particles (C), the above-mentioned method is exemplified.

In the case where polymerization is performed using (A2) a monomer containing a polymerizable group and an oxylamino group protected with a protective group [P], as the polymer particles (C), polymer particles having an oxylamino group protected with a protective group [P] can be obtained. Therefore, the preparation method of the present embodiment can be said to be a method for preparing "polymer particles having an oxylamino group protected with a protective group [P]".

Polymer particles having an oxylamino group can be prepared by deprotecting the polymer particles (C) obtained in this way. As the method of deprotecting the polymer particles (C), the above-mentioned method is exemplified.

In another embodiment, the present invention provides a composition containing polymer particles having a functional group for capturing sugar chains, and a surfactant. Preferably, the polymer particles are coated with the surfactant.

According to the composition of the present embodiment, the aggregation of the polymer particles under a high-temperature condition can be suppressed, and the hygroscopicity thereof can be deteriorated, without deteriorating the sugar chain capturing capability of the polymer particles having a functional group for capturing sugar chains.

In the above-described composition, the rate of change of mass calculated by Equation (F1) below is 90% to 112%. In Equation (F1), A represents the mass of the composition after incubation for 4 hours under an environment of a relative humidity of 50% and a temperature of 25°C, and B represents the mass of the composition before the incubation.

$$\text{Rate of change (\%)} = A/B \times 100 \text{ --- (F1)}$$

In the composition of the present embodiment, as the polymer particles and the surfactant, the above-described polymer particles and the above-described surfactant can be used.

«Preparation method and analysis method of sugar chain sample»

In an embodiment, the present invention provides a method for preparing a sugar chain sample using the above-described composition and a method for analyzing sugar chains in the sample. The polymer particles in the above-described composition surprisingly have excellent sugar chain capturing capability even in a state of coexisting with a surfactant. Therefore, these polymer particles can be directly used in capturing sugar chains without removing a surfactant from the composition, and are also excellent in terms of convenience.

In the method of the present embodiment, first, a sample containing a sugar chain is brought into contact with the above-described composition to bond the sugar chain to the polymer particles in the composition (process (a)). In other words, the polymer particles capture the sugar chain.

The "sample containing a sugar chain", for example, can be prepared from a biological sample. Examples of the biological sample include whole blood, serum, plasma, urine, saliva, cells, tissue, viruses, and plant tissues. In the present invention, purified or unpurified glycoprotein can be used. The sample may be pre-treated by a method, such as defatting, desalting, protein fractionation, or thermal denaturation.

It is possible to liberate a sugar chain from molecules (for example, glycoprotein molecules) including a sugar chain contained in the biological sample by using sugar chain liberation means. As the sugar chain liberation means, glycosidase treatment using N-glycosidase or O-glycosidase, hydrazinolysis, or β-elimination by alkali treatment can be used. In the case of performing analysis of a N-type sugar chain, a method using N-glycosidase is preferable. Prior to glycosidase treatment, protease treatment using trypsin or chymotrypsin may be performed.

The sample prepared in this way is brought into contact with the polymer particles of the present invention, thereby allowing the polymer particles to capture a sugar chain. Sugar chain is a sole substance having an aldehyde group, among substances in the body. Sugar chains are configured such that cyclic hemiacetal type sugar chains and noncyclic aldehyde type sugar chains exist in equilibrium in the state of an aqueous solution or the like. Substances in the body other than the sugar chain, such as protein, nucleic acid, and lipid, do not contain an aldehyde group. From this viewpoint, if polymer particles having a hydrazide group or an aminooxy group forming stable bonds by specifically reacting with an aldehyde group are used, it is possible to selectively capture only a sugar chain.

When a sugar chain is captured by the polymer particles, the pH of a reaction system is preferably 2 to 9, more preferably 2 to 7, and further more preferably 2 to 6. For pH adjustment, various buffer solutions can be used. Further, as the solvent at the time of capturing sugar chains, a mixed solvent of an acid and an organic solvent can be used. The acid used is not particularly limited, but examples thereof preferably include acetic acid, formic acid, trifluoroacetic acid, hydrochloric acid, citric acid, phosphoric acid, and sulfuric acid, more preferably acetic acid, formic acid, trifluoroacetic acid, and phosphoric acid, and further more preferably acetic acid and trifluoroacetic acid. The organic solvent is not particularly limited as long as it dissolves sugar and the above acid, but an organic solvent having a relatively low boiling point, such as acetonitrile, is suitably used because capturing efficiency is increased in many cases if this organic solvent is dried at the time of capturing. The mixing ratio of acid and organic solvent is preferably 0.1:99.9 to 10:90, more preferably 0.5:99.5 to 5:95, and most preferably 1:99 to 5:95. The temperature at the time of capturing sugar chains is preferably 4°C to 90°C, more preferably 30°C to 90°C, further more preferably 30°C to 80°C, and most preferably 40°C to 80°C. Reaction time can be suitably set. The polymer particles may pass through a sample solution by filling a column with these polymer particles.

Subsequently, the polymer particles bonded with a sugar chain (capturing a sugar chain) are washed (process (b)).

Among the substances captured by the polymer particles, substances other than sugar chain (non-specifically adsorbed substances) can be removed by washing the polymer particles capturing a sugar chain.

As the method of removing the substance other than sugar chain, a method of washing the polymer particles with an aqueous guanidine solution that is a chaotropic reagent capable of dissociating a hydrophobic bond, or a method of washing the polymer particles with pure water or an aqueous buffer solution (for example, a phosphate buffer solution or a tris buffer solution) can be used. As the washing conditions in the washing process, the temperature is 4°C to 40°C, and washing time is 10 seconds to 30 minutes. In the washing method, the polymer particles can be washed by immersing these polymer particles in a washing solution and repeating the exchange of the washing solution.

Specifically, the polymer particles are put into a centrifugal tube or a tube, a washing solution is added thereto, shaking is performed, and then the polymer particles are precipitated by centrifugation, and operations of removing the

supernatant are repeated, thereby washing the polymer particles. For example, the polymer particles are put into a centrifugal tube, a washing solution is added thereto, and then the polymer particles are precipitated by spontaneous precipitation or forcibly precipitated by centrifugation, and operations of removing the supernatant are repeated, thereby washing the polymer particles. Preferably, the washing operations are performed three times to six times. In the case of using magnetic beads, centrifugation is not required, which is convenient.

Further, it is also possible to use a filter tube which is a tubular container and which is provided at the bottom thereof with a liquid-permeable filter having a pore with a pore size that makes the polymer particles impermeable. If the filter tube filled with polymer particles is used, a washing solution necessary for washing can be removed through a filter, and thus the process of removing the supernatant after centrifugation is not required, thereby improving workability.

Various multi-well plates of 6 to 384 wells, each being provided at the bottom thereof with the filter, are commercially available, and it is possible to obtain high throughput by using these plates. Particularly, a multi-well plate of 96 wells is most suitable for high throughput with the development of a solution-dispensing apparatus, a suction removal system, and a plate transport system.

In the case of performing a sugar chain capture reaction in a continuous manner, washing treatment may be continuously performed in the sugar chain capture reaction by passing a washing solution through a column. Further, in the case of using a multi-plate, substances other than the polymer particles capturing a sugar chain may be removed by filtration or centrifugation.

Meanwhile, excess functional groups on the polymer particles, for example, can be capped by using acetic anhydride or the like.

Subsequently, sugar chains is liberated from the polymer particles bonded with a sugar chain (capturing a sugar chain) (process (c)).

In order to separate a sugar chain from the polymer particles, it is preferable to perform acid treatment. In the acid treatment, a mixed solvent of an acid and an organic solvent or a mixed solvent of an acid, water, and an organic solvent can be used. In the case of the mixed solvent of an acid, water, and an organic solvent, the content of water is preferably 0.1 % to 90%, more preferably 0.1 % to 80%, and further more preferably 0.1% to 50%. This mixed solvent may contain an aqueous buffer solution instead of water. The concentration of the buffer solution is preferably 0.1 mM to 1 M, more preferably 0.1 mM to 500 mM, and further more preferably 1 mM to 100 mM. The pH of a reaction solution is preferably 2 to 9, more preferably 2 to 7, and further more preferably 2 to 6. Examples of the acid used preferably include acetic acid, formic acid, trifluoroacetic acid, hydrochloric acid, citric acid, phosphoric acid, and sulfuric acid, more preferably acetic acid, formic acid, trifluoroacetic acid, and phosphoric acid, and further more preferably acetic acid and trifluoroacetic acid. Reaction temperature is preferably 4°C to 90°C, more preferably 25°C to 90°C, and further more preferably 40°C to 90°C. Reaction time is 10 minutes to 24 hours, preferably 10 minutes to 8 hours, and more preferably 10 minutes to 3 hours. It is preferable that the reaction be performed in an open system to completely evaporate a solvent, from the viewpoint of efficiently performing the reaction by liberating sugar chains.

Since the liberation reaction of a sugar chain can be performed around neutral from weak acid, it is possible to suppress the occurrence of hydrolysis of a sugar chain, such as elimination of sialic acid residues, compared to the excision reaction in the presence of strong acid, caused by conventional strong acid treatment, for example, such as 10% trifluoroacetic acid treatment.

Subsequently, it is also possible to label the free sugar chains obtained in the above process. As the labeling method, a reductive amination method and an exchange reaction method are exemplified.

In the reductive amination method, a sugar chain is labeled by a compound having an amino group. In a reaction system, a mixed solvent of an acid and an organic solvent or a mixed solvent of an acid, water, and an organic solvent can be used. The acid used is not particularly limited, but examples thereof preferably include acetic acid, formic acid, trifluoroacetic acid, hydrochloric acid, citric acid, phosphoric acid, and sulfuric acid, more preferably acetic acid, formic acid, trifluoroacetic acid, and phosphoric acid, and further more preferably acetic acid and trifluoroacetic acid. The organic solvent is not particularly limited as long as it dissolves the acid, but dimethyl sulfoxide is preferably used. In the case of the mixed solvent of an acid and an organic solvent, the mixing ratio of acid and organic solvent is preferably 1:99 to 50:50, more preferably 5:95 to 50:50, and most preferably 10:90 to 50:50. In the case of the mixed solvent of an acid, water, and an organic solvent, the results obtained at the time of measuring pH regardless of the ratio of the organic solvent are preferably conditions ranging from acidic to neutral. The pH of the mixed solvent is preferably 2 to 9, more preferably 2 to 8, and further more preferably 2 to 7. In both the case of the mixed solvent of an acid and an organic solvent and the case of the mixed solvent of an acid, water, and an organic solvent, the reaction temperature is preferably 4°C to 90°C, more preferably 25°C to 90°C, and further more preferably 40°C to 90°C. The concentration of an amino compound is preferably 1 mM to 10 M, and the concentration of a reducing agent is preferably 1 mM to 10 M. The reaction time is 10 minutes to 24 hours, preferably 10 minutes to 8 hours, and more preferably 10 minutes to 3 hours.

Here, preferably, the compound having an amino group has UV-visible absorption characteristics or fluorescent characteristics. Specifically, the compound is preferably at least one selected from the group consisting of 8-aminopyrene-1,3,6-trisulfonate, 8-aminonaphthalene-1,3,6-trisulphonate, 7-amino-1,3-naphthalenedisulfonic acid, 2-amino

9(10H)-acridone, 5-aminofluorescein, dansylethylenediamine, 2-aminopyridine, 7-amino-4-methylcoumarine, 2-aminobenzamide, 2-aminobenzoic acid, 3-aminobenzoic acid, 7-amino-1-naphthol, 3-(acetylamino)-6-aminoacrdine, 2-amino-6-cyanoethylpyridine, ethyl p-aminobenzoate, p-aminobenzonitrile, and 7-aminonaphthalene-1,3-disulfonic acid.

Particularly, in the case where the amino compound is 2-aminobenzamide, reaction conditions are as follows. In a reaction system, a mixed solvent of an acid and an organic solvent or a mixed solvent of an acid, water, and an organic solvent can be used. In the case of the mixed solvent of an acid and an organic solvent, the mixing ratio of acid and organic solvent is preferably 1:99 to 50:50, more preferably 5:95 to 50:50, and most preferably 10:90 to 50:50. In the case of the mixed solvent of an acid, water, and an organic solvent, the results obtained at the time of measuring pH regardless of the ratio of the organic solvent are preferably conditions ranging from acidic to neutral. The pH of the mixed solvent is preferably 2 to 9, more preferably 2 to 8, and further more preferably 2 to 7. The reaction temperature is preferably 4°C to 90°C, more preferably 30°C to 90°C, and further more preferably 40°C to 80°C. The concentration of the amino compound is 1 mM to 10 M, preferably 10 mM to 10 M, and more preferably 100 mM to 1 M. The concentration of the reducing agent is 1 mM to 10 M, preferably 10 mM to 10 M, and more preferably 100 mM to 2 M. The reaction time is 10 minutes to 24 hours, preferably 10 minutes to 8 hours, and more preferably 1 hour to 3 hours.

As the reducing agent, for example, sodium cyanoborohydride, methylamine borane, dimethylamineborane, trimethylamineborane, picolineborane, and pyridine borane are available, but it is preferable to use sodium cyanoborohydride in terms of reactivity.

Since the solution obtained after the foregoing process of dissociating sugar chains contains labeled sugar chains, an excessive amount of an unreacted amino compound, and an excessive amount of a reducing agent, it is preferable to perform a process of removing these excessive reagents. Any method of removal by silica column, removal by gel filtration, removal by ion exchange resin may be used, but it is preferable that the solvent used for preventing the dissociation of sialic acid be neutral.

Meanwhile, in the exchange reaction method, when applying the compound having an aminooxy group after the washing operation, a sugar chain is dissociated from the polymer particles by a hydrazine-oxime exchange reaction (in the case where the functional group specifically reacting with an aldehyde group of a sugar chain is a hydrazide group) or an oxime-oxime exchange reaction (in the case where the functional group specifically reacting with an aldehyde group of a sugar chain is an aminooxy group), and are labeled by an aminooxy compound. Therefore, in the case of this labeling method, the operation for separating a sugar chain from the polymer particles by acid treatment is not required.

It is preferable that the compound having an aminooxy group include a portion composed of at least one of arginine residue, tryptophan residue, phenylalanine residue, tyrosine residue, cysteine residue, and derivatives thereof.

As an example of the compound containing these residues and derivatives thereof, a substance or a salt thereof selected from O-benzylhydroxylamine; O-phenylhydroxylamine; O-(2,3,4,5,6-pentafluorobenzyl) hydroxylamine; O-(4-nitrobenzyl) hydroxylamine; 2-aminooxypyridine; 2-aminooxy methylpyridine; 4-[(aminooxyacetyl) amino] benzoic acid methyl ester; 4-[(aminooxyacetyl) amino] benzoic acid ethyl ester; 4-[(aminooxyacetyl) amino] benzoic acid n-butylester; and N-aminooxyacetyl-tryptophyl (arginine amide) is exemplified. In particular, a compound having a structure represented by Formula (16) or (17) below is preferable.

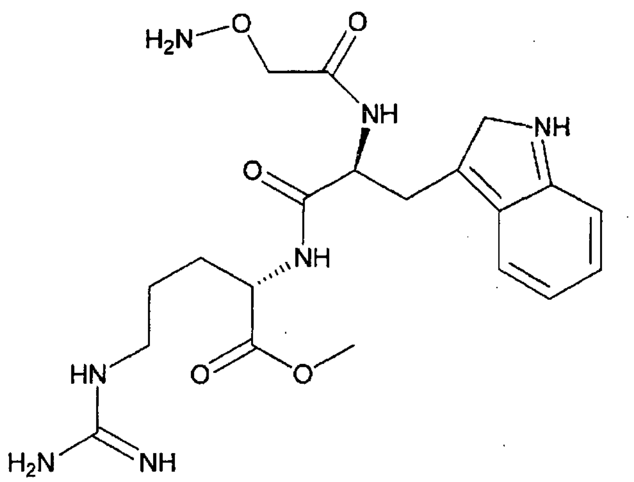

(16)

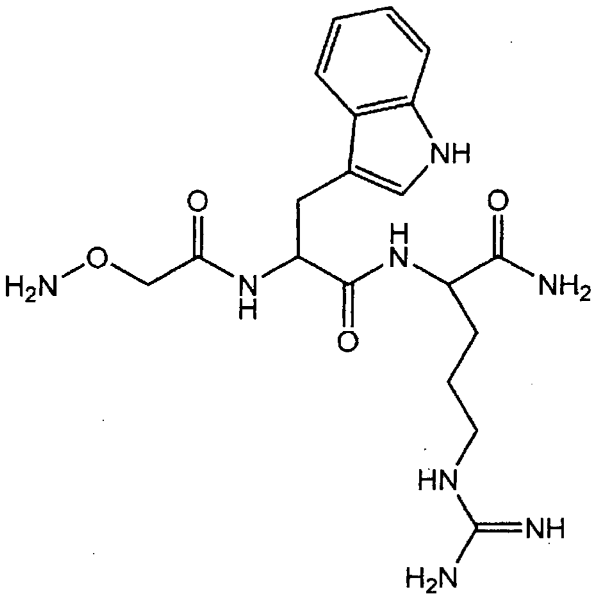

(17)

In the reaction system at the time of the exchange reaction, a mixed solvent of an acid and an organic solvent or a mixed solvent of an acid, water, and an organic solvent can be used. In the case of the mixed solvent of an acid and an organic solvent, the mixing ratio of acid and organic solvent is preferably 0.1:99.9 to 10:90, more preferably 0.5:99.5 to 5:95, and most preferably 1:99 to 5:95. In the case of the mixed solvent of an acid, water, and an organic solvent, from the results obtained at the time of measuring pH regardless of the ratio of the organic solvent, the pH of the mixed solvent is preferably 2 to 7, more preferably 3 to 6, and most preferably 3.5 to 5.5. The pH of the reaction solution can be adjusted within the above range by adding an acetic acid/acetonitrile solution. The temperature at the time of the exchange reaction is preferably 50°C to 95°C, more preferably 60°C to 90°C, and most preferably 70°C to 90°C. At the time of the exchange reaction, a reaction container is opened, and heating is performed, so that the exchange reaction proceeds while evaporating a solvent, and dryness is finally obtained, thereby efficiently performing the exchange reaction.

By the above process, a sugar chain sample can be prepared. In the analysis method of a sugar chain in the sample, the sugar chain liberated by the above-described sugar chain preparation method are analyzed (process (d)). The sugar chain solution recovered through the above method can be subjected to analysis of a sugar chain (for example, analysis of structure and amount of a sugar chain) by a commonly known method, such as mass spectrometry (for example, MALDI-TOF MS), chromatography (for example, HPLC and HPAE-PAD), or electrophoresis (for example, capillary electrophoresis) directly or after removing the excessively contained labeled compound. In the analysis of a sugar chain, if necessary, various databases (for example, GlycoMod, Glycosuite, SimGlycan(R), and the like) can be referred thereto.

Examples

Hereinafter, the present invention will be described in more detail with reference to Examples and Comparative Examples. However, the present invention is not limited to the following Examples.

[Example 1]

(Synthesis of carboxylic acid ester monomer containing polymerizable group (A1))

A compound (e), which is a carboxylic acid ester monomer containing a polymerizable group, was synthesized by the following scheme.

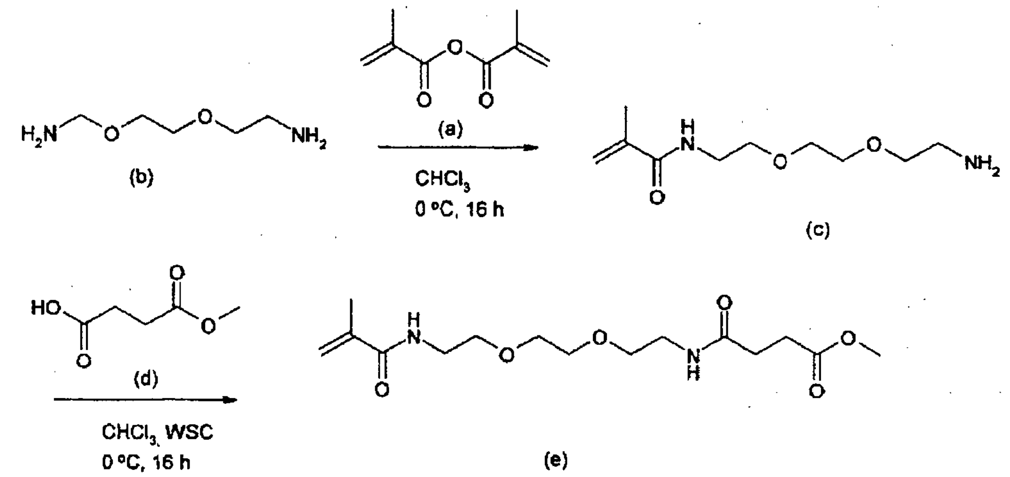


A solution, in which methacrylic anhydride (MAH: 5 g, 0.03 mol) was dissolved in 100 mL of chloroform, was dropped into a solution, in which 25 g of (ethylenedioxy) bis(ethylamine) (EDBEA: 25 g, 0.17 mol) was dissolved in 100 mL of chloroform, on an ice bath. Nitrogen was sealed thereinto, and stirring was performed overnight, so as to obtain a reaction solution. The residues obtained by evaporating a solvent from the obtained reaction solution passed through a silica gel column, (developing solvent: mixed solvent of chloroform 90 vol. / methanol 10 vol.) to extract a predetermined fraction, and a solvent was evaporated from this fraction, so as to obtain an intermediate product (c). 5 g (0.023 mol) of this intermediate product (c) was dissolved in 100 mL of chloroform to obtain a solution, and 1.5 equivalents of monomethyl succinate and 1.5 equivalents of 1-ethyl-3-(3-dimethylaminopropyl) carbodiimide, which is a water-soluble carbodiimide compound (WSC), were added to this solution, and sealing was performed. Nitrogen was sealed thereinto, and stirring was performed overnight, so as to obtain a reaction solution. The residues obtained by evaporating a solvent from the obtained reaction solution passed through a silica gel column (developing solvent: mixed solvent of chloroform 90 vol. / methanol 10 vol.) to extract a predetermined fraction, and the solvent was evaporated from this fraction, so as to obtain a carboxylic acid ester monomer (e) containing a polymerizable group. The obtained compound (e) was confirmed to be a target product by NMR or matrix-assisted laser ionization-time-of flight mass spectrometer (MALDI-TOF-MS).

(Synthesis of polymer particles by reverse phase suspension polymerization reaction)

A sealable polymerization container was filled with 40 mL of 0.2% sorbitan monostearate-containing cyclohexane, and the oxygen in the system was purged by nitrogen. A mixture including 2 g (6 mmol) of the carboxylic acid ester monomer (e), ethylene glycol dimethacrylate (EGDMA: 5 mol% with respect to methyl ester-containing monomer), 1.5 mL of pure water, and 0.0175 g of potassium peroxodisulfate (1 mol% with respect to the total monomer) was introduced into the polymerization container with nitrogen purging, and was dispersed in the sorbitan monostearate-containing cyclohexane. After nitrogen purging was stopped and sealing was performed, a reaction was performed at 70°C for 16 hours with stirring, so as to form polymer particles.

The formed polymer particles were recovered by centrifugation, and were washed with ethanol and water.

(Introduction of hydrazide group)

500 mg of the polymer particles were put into a container, 4 mL of hydrazine monohydrate (stock solution, 98 vol% or more) was added thereto, followed by stirring and standing treatment at room temperature for 2 hours. After the reaction, hydrazine monohydrate was removed from the reaction product, the reaction product was washed with methanol, and then the reaction product was rinsed with 1M hydrochloric acid. Thereafter, the reaction product was further washed with pure water, so as to obtain polymer particles having a hydrazide group.

(Coating with surfactant)

100 mg of the polymer particles having a hydrazide group were dispersed in 1 mL of a 2 wt% cyclohexane solution of sorbitan monostearate, and then centrifuged. Thereafter, the supernatant was removed, and then the polymer particles were dried in a vacuum and coated with a surfactant, so as to obtain polymer particles of Example 1 (composition containing polymer particles and a surfactant).

[Example 2]

A composition of Example 2 was obtained in the same manner as in Example 1, except that, at the time of coating with a surfactant in Example 1, a 2 wt% cyclohexane solution of sorbitan tristearate was used instead of the 2 wt% cyclohexane solution of sorbitan monostearate.

[Example 3]

A composition of Example 3 was obtained in the same manner as in Example 1, except that, at the time of coating with a surfactant in Example 1, a 2 wt% ethanol solution of sodium lauryl sulfate was used instead of the 2 wt% cyclohexane solution of sorbitan monostearate.

[Example 4]

(Synthesis of polymer particles by suspension polymerization reaction)

A sealable polymerization container was filled with 40 mL of a 0.15% aqueous polyvinyl alcohol solution, and the oxygen in the system was purged by nitrogen. A mixture including 2 g (6 mmol) of the carboxylic acid ester monomer (e), ethylene glycol dimethacrylate (EGDMA: 5 mol% with respect to methyl ester-containing monomer), 1.5 mL of chloroform, and 0.011 g of azobisisobutyronitrile (1 mol% with respect to the total monomer) was introduced into the polymerization container with nitrogen purging, and was dispersed in the aqueous polyvinyl alcohol solution. After nitrogen purging was stopped and sealing was performed, a reaction was performed at 70°C for 16 hours with stirring, so as to form polymer particles. The formed polymer particles were recovered by centrifugation, and were washed with methanol and water.

(Introduction of hydrazide group)

500 mg of the polymer particles were put into a container, 4 mL of hydrazine monohydrate (stock solution, 98 vol% or more) was added thereto, followed by stirring and standing treatment at room temperature for 2 hours. After the reaction, hydrazine monohydrate was removed from the reaction product, the reaction product was washed with methanol, and then the reaction product was rinsed with 1M hydrochloric acid. Thereafter, the reaction product was further washed with pure water, so as to obtain polymer particles having a hydrazide group.

(Coating with surfactant)

100 mg of the polymer particles having a hydrazide group were dispersed in 1 mL of a 2 wt% cyclohexane solution of sorbitan monostearate, and then centrifuged. Thereafter, the supernatant was removed, and then the polymer particles were dried in a vacuum and coated with a surfactant, so as to obtain polymer particles of Example 4 (composition containing polymer particles and a surfactant).

[Example 5]

A composition of Example 5 was obtained in the same manner as in Example 1, except that, at the time of coating with a surfactant in Example 4, a 2 wt% cyclohexane solution of sorbitan tristearate was used instead of the 2 wt% cyclohexane solution of sorbitan monostearate.

[Example 6]

A composition of Example 6 was obtained in the same manner as in Example 1, except that, at the time of coating with a surfactant in Example 4, a 2 wt% methanol solution of sodium lauryl sulfate was used instead of the 2 wt% cyclohexane solution of sorbitan monostearate.

[Comparative Example 1]

A composition in which the polymer particles were not coated with a surfactant in Example 1 was used as a composition of Comparative Example 1.

[Comparative Example 2]

A composition in which the polymer particles were not coated with a surfactant in Example 4 was used as a composition of Comparative Example 2.

<Experimental Example 1>

[Change in particle diameter before and after storage at 60°C]

50 mg of each of the compositions of Examples and Comparative Examples was dried in a vacuum at 23°C for 12 hours or longer. Subsequently, each of the compositions was put into a plastic container, the plastic container filled with the composition was introduced into an aluminum bag together with a silica gel desiccant, and the aluminum bag was sealed. Then, the heat retaining thereof was performed in an oven at 60°C for 3 days.
The particle size distribution of the composition heat-retained at 60°C was measured using a laser diffraction/scattering type particle size analyzer MT3300 manufactured by NIKKISO CO., LTD., and the average particle diameter of polymer particles in the composition was compared to the measurement result before storage at 60°C.
The rate of change of the average particle diameter was calculated by Equation (F2) below. In Equation (F2), C represents the average particle diameter of the polymer particles in the composition after heat-retaining treatment, and D represents the average particle diameter of the polymer particles in the composition before the heat-retaining treatment.

$$\text{Rate of change (\%)} = C/D \times 100 \text{ --- (F2)}$$

[Table 1]

| | Example 1 | Example 2 | Example 3 | Comparative Example 1 | Example 4 | Example 5 | Example 6 | Comparative Example 2 |
|---|---|---|---|---|---|---|---|---|
| Before storage (μm) | 82 | 83 | 81 | 80 | 68 | 69 | 69 | 68 |
| After storage (μm) | 78 | 81 | 80 | 123 | 67 | 70 | 68 | 118 |
| Rate of change (%) | 95.1 | 97.6 | 98.8 | 153.8 | 98.5 | 101.4 | 98.6 | 173.5 |

In all of the Examples in which surfactant treatment had been carried out, there was hardly any change in particle diameter before and after heat-retaining treatment at 60°C. In contrast, in Comparative Examples in which surfactant treatment had not been carried out, the particle diameter increased after heat-retaining treatment at 60°C. That is, it was considered that the aggregation of polymer particles in heat-retaining treatment at 60°C could be suppressed by surfactant treatment.

<Experimental Example 2>

[Change in amount of hydrazide group before and after heat-retaining treatment at 60°C]

In each of the compositions of Examples and Comparative Examples, the amount of a hydrazide group before and after heat-retaining treatment at 60°C was measured using 2,4,6-trinitrobenzene sulfonic acid (TNBS). That is, each of the compositions was dispersed in an aqueous TNBS solution, and the amount of a hydrazide group was calculated from the difference in absorbance at 345 nm before and after the dispersion. The measurement results thereof are shown below.

[Table 2]

| | Example 1 | Example 2 | Example 3 | Comparative Example 1 | Example 4 | Example 5 | Example 6 | Comparative Example 2 |
|---|---|---|---|---|---|---|---|---|
| Before storage | 3.0 | 2.9 | 3.0 | 3.0 | 3.4 | 3.3 | 3.5 | 3.4 |
| After storage | 3.0 | 3.0 | 2.9 | 3.0 | 3.4 | 3.4 | 3.4 | 3.3 |
| Unit: μmol/mg | | | | | | | | |

In both Examples and Comparative Examples, the amount of a hydrazide group was not changed by heat-retaining treatment at 60°C. That is, the amount of a hydrazide group was maintained at 60°C, regardless of the presence or absence of surfactant treatment.

<Experimental Example 3>

[Evaluation of hygroscopicity of polymer particles]

Each of the compositions of Examples and Comparative Examples was collected in a plastic container in a predetermined amount, and released in the air (standing-treated under an environment of a relative humidity of 50% and a temperature of 25°C), the rate of change of mass after 4 hours was examined, and hygroscopicity was evaluated. The rate of change of mass was calculated by Equation (F1) below. In Equation (F1), A represents the mass of the composition after incubation for 4 hours under an environment of a relative humidity of 50% and a temperature of 25°C, and B represents the mass of the composition before the incubation.

$$\text{Rate of change (\%)} = A/B \times 100 \text{ --- (F1)}$$

The experiments were carried out several times. Representative experimental results are shown in Tables 3 and 4.

[Table 3]

| | Example 1 | Example 2 | Example 3 | Comparative Example 1 | Example 4 | Example 5 | Example 6 | Comparative Example 2 |
|---|---|---|---|---|---|---|---|---|
| Rate of change of mass (%) | 108 | 106 | 109 | 115 | 107 | 105 | 108 | 110 |

[Table 4]

| | Example 1 | Example 2 | Example 3 | Comparative Example 1 | Example 4 | Example 5 | Example 6 | Comparative Example 2 |
|---|---|---|---|---|---|---|---|---|
| Rate of change or mass (%) | 108 | 107 | 111 | 118 | 108 | 106 | 109 | 116 |

As a result, although there is some variation, it was found that the hygroscopicity of each of the compositions of Examples was lower than (the rate of change of mass was smaller than) that of each of the compositions of Comparative Examples. Further, in Comparative Example 1, deterioration of operability, such as aggregation of polymer particles or adsorption of polymer particles on a plastic container, occurred with moisture absorption, but in all of the compositions of Examples in which surfactant treatment had been carried out, no such phenomenon was observed.

<Experimental Example 4>

[Sugar chain analysis of bovine serum-derived IgG]

1. Pre-treatment of biological sample

1 mg of bovine serum-derived IgG was dissolved in 50 μL of 100 mM ammonium bicarbonate, and then 5 μL of 120 mM DTT (dithiothreitol) was added thereto, and a reaction was performed at 60°C for 30 minutes. After the completion of the reaction, 10 μL of 123 mM IAA (iodoacetamide) was added thereto, and a reaction was performed at room temperature for 1 hour under light blocking. Subsequently, protease treatment was performed using trypsin of 400 U, and protein moiety was fragmented into peptides. After the reaction solution was treated at 90°C for 5 minutes, treatment using glycosidase F of 5 U was performed to liberate sugar chains from the peptides, so as to obtain a pre-treated biological sample.

2. Sugar chain-capturing process (a) and washing process (b)

20 μL of suspended solids of the pre-treated biological sample and 180 μL of a 2% acetic acid/acetonitrile solution were added to a disposable column filled with 5 mg of the polymer particles (composition) of each of Examples and Comparative Examples, and a reaction was performed at 80°C for 1 hour. The reaction was performed in an open system, and it was visually observed that a solvent was completely evaporated from the composition, and thus the composition was present in the state of dryness. Subsequently, after the polymer particles were washed with a guanidine solution, pure water, methanol, or a triethylamine solution, 10% acetic anhydride/methanol was added thereto, and a reaction was performed at room temperature for 30 minutes, thereby capping the unreacted hydrazide group. After the capping, the composition was washed with pure water.

3. Sugar chain liberating process (c)

Next, 20 μL of pure water and 180 μL of a 2% acetic acid/acetonitrile solution were added to the disposable column, and a reaction was performed at 70°C for 1.5 hours. The reaction was performed in an open system, and it was visually observed that a solvent was completely evaporated from the composition, and thus the composition was present in the state of dryness.

4. Labeling process (d)

Further, 50 μL of a solution, in which 2-aminobenzamide (2-AB) and sodium cyanoborohydride were dissolved in a 30% acetic acid/DMSO mixed solvent such that final concentrations thereof were adjusted to 0.35 M and 1 M, respectively, was added, and a reaction was performed at 60°C for 2 hours.

The above sugar chain-capturing process (a), washing process (b), sugar chain liberating process (c), and labeling process (d) were performed in the disposable column that is the same container.

5. Excess reagent-removing process

50 μL of a reaction solution was recovered, diluted tenfold with acetonitrile, and then added to a column packed with silica gel (Iatrobeads, 6RS-8060, manufactured by Mitsubishi Chemical Iatron Corporation) to allow the silica gel to adsorb the labeled sugar chains. The column was washed with acetonitrile or an acetonitrile/water mixed solution (95:5), and then the labeled sugar chains were recovered by 50 μL of pure water.

6. Detection of labeled sugar chains

The obtained labeled sugar chains were measured by HPLC. The labeled sugar chains were measured at an excitation wavelength of 330 nm and a fluorescent wavelength of 420 nm using an amino column (Shodex Asahipak NH2P-50). As a result, sugar chains labeled by 2AB were detected.

FIG. 1 shows the total peak areas calculated from HPLC charts obtained in Examples 1 and 4 and Comparative Examples 1 and 2. As shown in FIG. 1, in all of the compositions, the total peak areas were equal to each other. That is, in all of the compositions, the total sugar chain capturing amounts were equal to each other. Similar results were obtained in other Examples.

FIG. 2 shows the area ratios of the main seven peaks detected by HPLC charts obtained in Examples 1 and 4 and Comparative Examples 1 and 2. The horizontal axis shows the peak number. As shown in FIG. 2, it was understood that, in all of the compositions, the respective area ratios were equal to each other, and the same sugar chains can be captured at the same ratio. Even in other Examples, similar results were obtained.

As described above, it was shown that the surfactant did not deteriorate the sugar chain capturing capability.

<Experimental Example 5>

[Acceleration test]

Each of the compositions of Example 4 and Comparative Example 2 was collected in a plastic container in a predetermined amount and dried in a vacuum at about 23°C for 12 hours or longer, and then the plastic container filled with the composition was introduced into an aluminum bag together with a silica gel desiccant, and the aluminum bag was sealed. Then, in this sealed state, the plastic container filled with the composition was kept at 37°C for 3 months. This treatment corresponds to storage at 4°C for 2.8 years from the results of an Arrhenius plot separately carried out.

When these compositions were dispersed in water and sucked with a pipette, in the composition of Comparative Example 2, polymer particles clogged the tip of the pipette, whereas, in the composition of Example 4, no such phenomenon was observed.

Subsequently, when the particle size distribution of these particles was measured in the same manner as above and the average particle diameters thereof before and after standing treatment were compared, the average particle diameter of the polymer particles in the composition of Comparative Example 2 was greatly increased from 68 μm to 133 μm, and thus aggregation had proceeded. In contrast, the average particle diameter of the polymer particles in the composition of Example 4 was slightly increased from 68 μm to 85 μm.

In the composition of Example 4 after standing treatment and the composition of Example 4 having been kept at 4°C during the standing treatment, when the amounts of a hydrazide group were determined, both of the amounts were the same as those immediately after preparation, and no difference was observed.

In addition, sugar chain capturing capability was examined using 0.1 μg of maltoheptaose in the same manner as in Example 4. FIG. 3 is a graph showing the examined results of sugar chain capturing capability. As shown in FIG. 3, before and after standing treatment, no change in the total peak area obtained from HPLC chart was observed. These results show that the composition after standing treatment maintains sugar chain capturing capability.

From the above results, it was clearly found that the compositions of Examples can suppress the aggregation of polymer particles while maintaining sugar chain capturing capability, compared to conventional compositions.

Industrial Applicability

The polymer particles of the present invention are excellent in quality stability and operability in addition to sugar chain capturing capability. Sugar chain research can be used in the recovery of sugar chains from natural products or the manufacture of sugar chain standard materials from natural products, and can also be applied in the medical field of disease marker research by sugar chain analysis, diagnosis by sugar chain analysis, or the like.

## Claims

**1.** A composition, comprising:

polymer particles having a functional group for capturing a sugar chain,
wherein the rate of change of mass calculated by Equation (F1) below is more than 90% and less than 112%

$$\text{Rate of change (\%)} = A/B \times 100 \text{ --- (F1)}$$

[in Equation (F1), A represents the mass of the composition after incubation for 4 hours under an environment of a relative humidity of 50% and a temperature of 25°C, and B represents the mass of the composition before

the incubation].

2. The composition according to Claim 1, wherein the rate of change of average particle diameter calculated by Equation (F2) below is 90% to 120%

$$\text{Rate of change (\%)} = C/D \times 100 \text{ --- (F2)}$$

[in Equation (F2), C represents the average particle diameter of the polymer particles in the composition, measured by a laser diffraction/scattering type particle size analyzer after the heat-retaining treatment of the composition at 60°C for 3 days under a drying condition and suspending the composition in water, and D represents the average particle diameter of the polymer particles in the composition, measured by a laser diffraction/scattering type particle size analyzer before the heat-retaining treatment of the composition and suspending the composition in water].

3. The composition according to Claim 1 or 2, wherein the composition containing the polymer particles further contains a surfactant.

4. The composition according to Claim 3, wherein the polymer particles are coated with the surfactant.

5. The composition according to Claim 3 or 4, wherein the surfactant is a sorbitan fatty acid ester or an anionic surfactant.

6. The composition according to any one of claims 1 to 5, wherein the average particle diameter of the polymer particles is 0.05 μm to 1000 μm.

7. The composition according to any one of Claims 1 to 6, wherein the functional group is a hydrazide group or an aminooxy group.

8. The composition according to any one of Claims 1 to 7, wherein each of the polymer particles has a crosslinked polymer structure represented by Formula (1) below

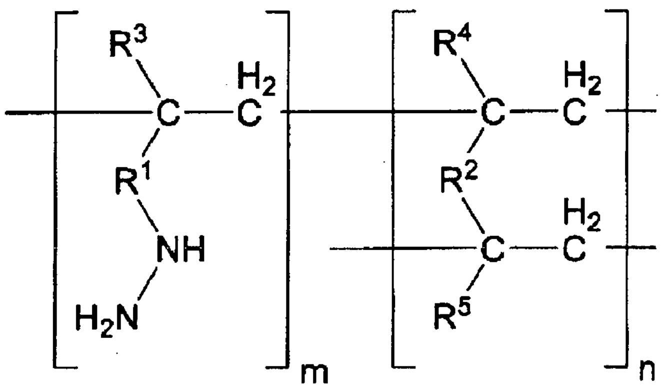

(1)

[in Formula (1), each of $R^1$ and $R^2$ represents a hydrocarbon chain of 1 to 20 carbon atoms which may be interrupted by -O-, -S-, -NH-, -CO-, or -CONH-; each of $R^3$, $R^4$, and $R^5$ represents H, $CH_3$, or a hydrocarbon chain of 2 to 5 carbon atoms; and m:n = 99:1 to 70:30 is satisfied].

9. The composition according to Claim 8, wherein the crosslinked polymer structure is represented by Formula (2) below.

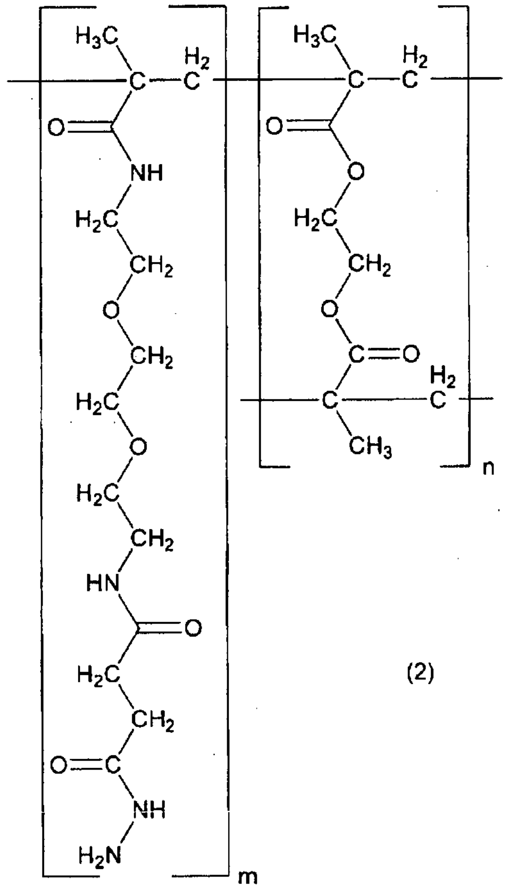

(2)

[in Formula (2), m:n = 99:1 to 70:30 is satisfied].

**10.** A method for preparing a sugar chain sample, comprising the processes of:

(a) mixing a sample containing a sugar chain with the composition according to any one of Claims 1 to 9 to bond the sugar chain to the polymer particle in the composition;
(b) washing the polymer particle bonded to the sugar chain; and
(c) liberating the sugar chain from the polymer particle bonded to the sugar chain.

**11.** A method for analyzing a sugar chain in a sample, comprising the processes of:

(a) mixing a sample containing a sugar chain with the composition according to any one of Claims 1 to 9 to bond the sugar chain to the polymer particle in the composition;
(b) washing the polymer particle bonded to the sugar chain;
(c) liberating the sugar chain from the polymer particle bonded to the sugar chain; and
(d) analyzing the liberated sugar chain.

FIG. 1

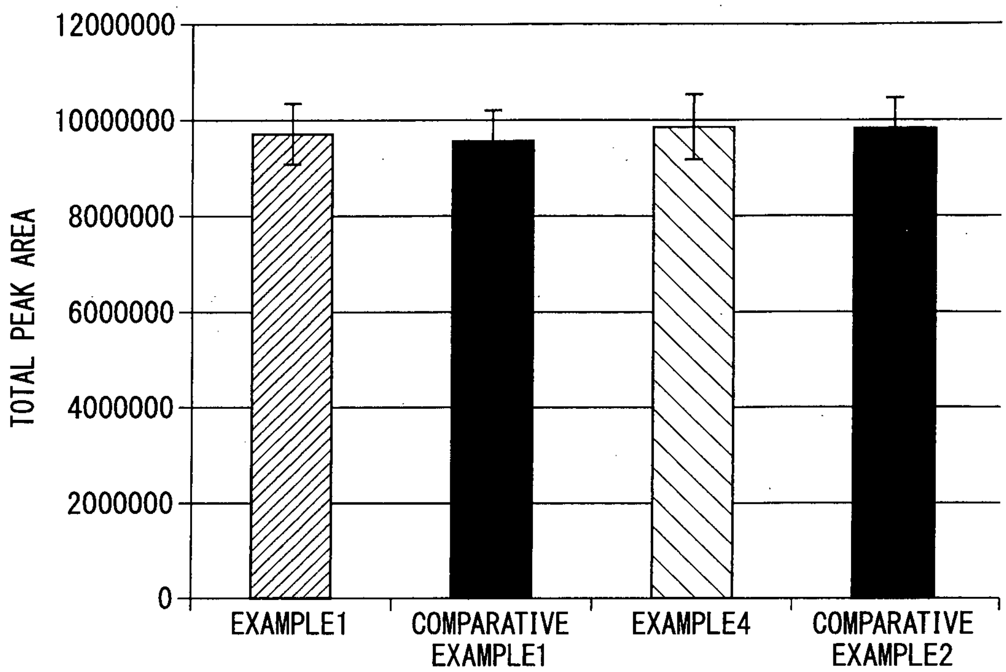
12000000
10000000
8000000
6000000
4000000
2000000
0
TOTAL PEAK AREA
EXAMPLE1
COMPARATIVE EXAMPLE1
EXAMPLE4
COMPARATIVE EXAMPLE2

FIG. 2

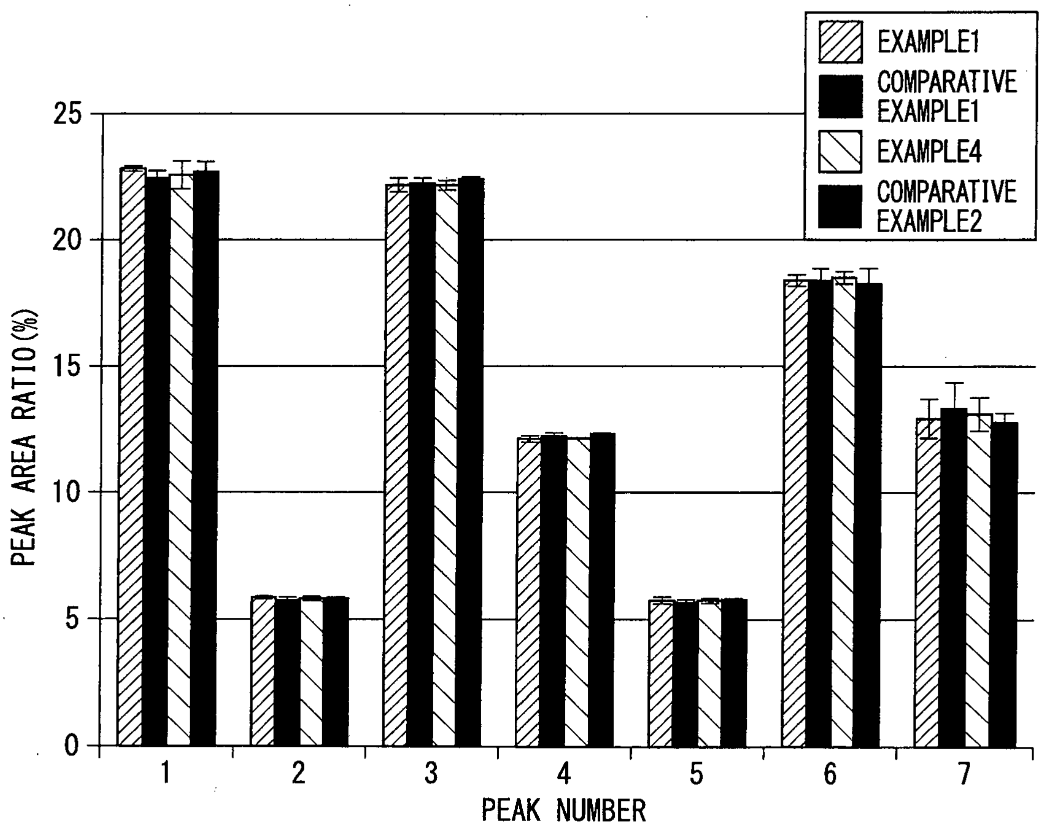
EXAMPLE1
COMPARATIVE EXAMPLE1
EXAMPLE4
COMPARATIVE EXAMPLE2
25
20
15
10
5
0
PEAK AREA RATIO (%)
1
2
3
4
5
6
7
PEAK NUMBER

FIG. 3

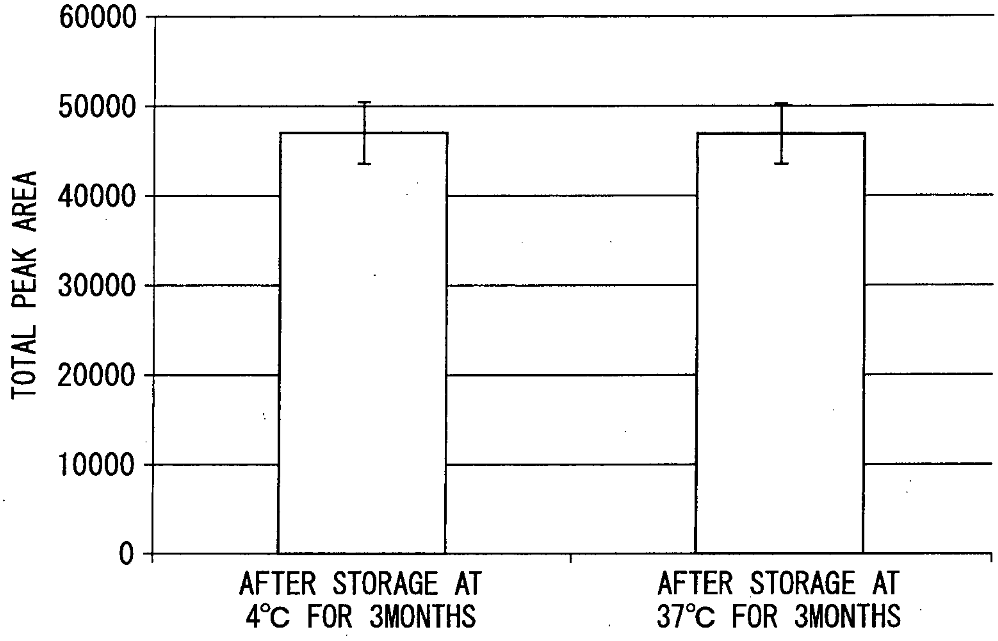
60000
50000
40000
30000
20000
10000
0
TOTAL PEAK AREA
AFTER STORAGE AT
4°C FOR 3MONTHS
AFTER STORAGE AT
37°C FOR 3MONTHS

**INTERNATIONAL SEARCH REPORT**

International application No. PCT/JP2015/050602

A. CLASSIFICATION OF SUBJECT MATTER
*G01N30/00*(2006.01)i, *B01J20/28*(2006.01)i, *G01N30/88*(2006.01)i

According to International Patent Classification (IPC) or to both national classification and IPC

B. FIELDS SEARCHED

Minimum documentation searched (classification system followed by classification symbols)
G01N30/00, B01J20/28, G01N30/88

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| Y | JP 2013-177621 A (Sumitomo Bakelite Co., Ltd.), 09 September 2013 (09.09.2013), entire text & US 2009/0306291 A1 & EP 2056106 A1 & WO 2008/018170 A1 & CA 2660300 A & KR 10-2009-0051176 A & CN 101501492 A | 1-11 |
| Y | JP 2008-268043 A (Denka Seiken Co., Ltd.), 06 November 2008 (06.11.2008), paragraphs [0035], [0040] (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 April 2015 (03.04.15) | 14 April 2015 (14.04.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/050602

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2008/090922 A1 (Toray Industries, Inc.), 31 July 2008 (31.07.2008), paragraph [0025] & US 2010/0029503 A1 & EP 2107373 A1 & CA 2671866 A & KR 10-2009-0113306 A & AU 2008208342 A & CN 101578518 A & ES 2384745 T & DK 2107373 T | 1-11 |
| A | JP 5-156034 A (The Dow Chemical Co.), 22 June 1993 (22.06.1993), entire text; all drawings & US 5633316 A & GB 9107952 A & EP 509708 A1 & DE 69223674 T & ES 2110470 T & AT 161549 T & AU 1487992 A & CA 2066010 A & FI 921668 A & MX 9201747 A & NO 921492 A & DK 509708 T & KR 10-0195778 B | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008018170 A